(19) Europäisches Patentamt / European Patent Office / Office européen des brevets

(11) **EP 4 518 176 A1**

(12) **EUROPEAN PATENT APPLICATION**
published in accordance with Art. 153(4) EPC

(43) Date of publication:
05.03.2025 Bulletin 2025/10

(21) Application number: 23795331.0

(22) Date of filing: 24.04.2023

(51) International Patent Classification (IPC):
*H04B 7/06* (2006.01)

(52) Cooperative Patent Classification (CPC):
H04B 7/06

(86) International application number:
PCT/CN2023/090275

(87) International publication number:
WO 2023/207898 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.04.2022 CN 202210442243
09.10.2022 CN 202211228519

(71) Applicant: **Vivo Mobile Communication Co., Ltd.**
**Dongguan, Guangdong 523863 (CN)**

(72) Inventors:
• **YUAN, Jiangwei**
**Dongguan, Guangdong 523863 (CN)**
• **SONG, Yang**
**Dongguan, Guangdong 523863 (CN)**

(74) Representative: **Cabinet Beaumont**
**4, Place Robert Schuman**
**B.P. 1529**
**38025 Grenoble Cedex 1 (FR)**

(54) **PMI FEEDBACK METHOD FOR MULTI-TRP TRANSMISSION, AND DEVICE, USER EQUIPMENT AND NETWORK-SIDE DEVICE**

(57) This application discloses a PMI feedback method for multi-TRP transmission, a terminal, and a network-side device, pertaining to the field of wireless communication. The PMI feedback method for multi-TRP transmission according to an embodiment of this application includes: determining, by a terminal based on target parameters configured by a network side for a plurality of TRPs permitting joint transmission, an orthogonal beam group set corresponding to each TRP; selecting, based on channel information of each TRP, a target orthogonal beam group corresponding to the TRP from the orthogonal beam group set corresponding to the TRP, and selecting the predetermined number of target orthogonal beams corresponding to the TRP from the target orthogonal beam group; determining a first feedback parameter for feeding back target orthogonal beam groups corresponding to the plurality of TRPs and a second feedback parameter for feeding back the predetermined number of target orthogonal beams in each of the target orthogonal beam groups; and sending, by the terminal, a PMI parameter, where the PMI parameter includes the first feedback parameter and the second feedback parameter.

FIG. 2

**Description**

**CROSS-REFERENCE TO RELATED APPLICATIONS**

This application claims priority to Chinese Patent Application No.202210442243.5, filed with the China National Intellectual Property Administration on April 25, 2022 and entitled "PMI FEEDBACK METHOD FOR MULTI-TRP TRANSMISSION, TERMINAL, AND NETWORK-SIDE DEVICE" and Chinese Patent Application No.202211228519.6, filed with the China National Intellectual Property Administration on October 9, 2022 and entitled "PMI FEEDBACK METHOD FOR MULTI-TRP TRANSMISSION, TERMINAL, AND NETWORK-SIDE DEVICE", which is incorporated herein by reference in their entirety.

**TECHNICAL FIELD**

This application pertains to the field of wireless communication technologies, and particularly relates to a precoding matrix indicator (Precoding matrix indicator, PMI) feedback method for multi-transmission reception point (Transmission Reception Point, TRP) transmission, a terminal, and a network-side device.

**BACKGROUND**

Coordinated multiple point (Coordinated Multiple Points, CoMP) transmission refers to that a plurality of geographically separated transmission reception points (Transmission Reception Point, TRP) coordinate for data transmission of a terminal or jointly receive data from a terminal. The plurality of transmission points involved in the coordination are usually base stations in different cells. The coordination among base stations in multiple cells can turn interfering signals into desired signals, thereby reducing the inter-cell interference and increasing the spectrum utilization of a system.

Each common CoMP scheme can be classified into one of the following categories: joint processing (Joint Processing, JP) or collaborative scheduling (Collaborative Scheduling, CS)/coordinated beamforming (Coordinated Beamforming, CB).

Joint processing (JP) means that data of a terminal (User Equipment, UE) is available at more than one time-frequency resource point in a CoMP cooperating set. Joint processing includes the following.

(1) Joint transmission (Joint Transmission, JT). For example, data is transmitted from multiple points (part of the CoMP cooperating set or the entire CoMP cooperating set) to one UE or multiple UEs in one time-frequency resource. Alternatively, data is transmitted simultaneously from multiple points to UE, for example, to improve the received signal quality and/or data throughput (coherently or incoherently).

(2) Dynamic point selection (Dynamic Point Selection, DPS)/frequency modulation. Data is transmitted from one point (in the CoMP cooperating set) in a time-frequency resource. A sending/mixing point can be changed from one subframe to another, including change in a radio bearer (Radio Bearer, RB) pair within a subframe. Data is available at multiple points. Dynamic point selection/frequency modulation may include dynamic cell selection (Dynamic Cell Selection, DCS).

(3) DPS combined with JT. In this case, multiple points in time-frequency resources can be selected for data transmission. Collaborative scheduling/coordinated beamforming (CS/CB) means that for a time-frequency resource, data of UE is available only at one point in the CoMP cooperating set and transmitted from that point (downlink (Downlink, DL) data transmission starts from this point), but decision on user scheduling/beamforming is coordinated among corresponding points in the CoMP cooperating set. The selection of a transmission point is semi-persistent, namely, semi-persistent point selection (Semi-Persistent Point Selection, SSPS). To be specific, the transmission point can only be changed in a semi-persistent way for each transmission from one point to specified UE.

In the related art, considering feedback overhead of precoding matrix indicator (Precoding matrix indicator, PMI), frequency domain compression is introduced in the codebook design, the supported quantity of highest ranks (Rank) is extended to 4, and a Bitmap mode is introduced to indicate the distribution of non-zero coefficients for PMI feedback. Generation of codebook of each layer can be expressed by the following formula:

$$W = W_1 \widetilde{W}_2 W_f^H$$

$$W_1 = \begin{bmatrix} v_0 v_1 \dots v_{L-1} & 0 \\ 0 & v_0 v_1 \dots v_{L-1} \end{bmatrix}$$

where, and $v_i$, $i \in \{0,1, \dots , L - 1\}$ represent DFT beam vectors of a dimension $N_1 N_2 \times 1$.

$$\widetilde{W}_2 = \begin{bmatrix} p_0^{(1)} & \cdots & 0 \\ \vdots & \ddots & \vdots \\ 0 & \cdots & p_{2L-1}^{(1)} \end{bmatrix} \begin{bmatrix} p_{0,0}^{(2)} \varphi_{0,0} & \cdots & p_{0,Mv-1}^{(2)} \varphi_{0,Mv-1} \\ \vdots & \ddots & \vdots \\ p_{2L-1,0}^{(2)} \varphi_{2L-1,0} & \cdots & p_{2L-1,Mv-1}^{(2)} \varphi_{2L-1,Mv-1} \end{bmatrix} .$$

Values of $p_i^{(1)}$, $i \in \{0,1, \dots, L - 1\}$ are the same, which are the amplitude coefficient of a polarization direction r = 0. Values of $p_i^{(1)}$, $i \in \{L, L + 1, \dots, 2L - 1\}$ are the same, which are the amplitude coefficient of a polarization direction r = 1. $p_{i,m}^{(2)}$ and $\varphi_{i,m}$ are the amplitude coefficient and phase coefficient of tap m beam $i$. $W_f = [f_0 f_1 \dots f_{Mv-1}]$ and $f_i$, $i \in \{0,1, \dots, Mr - 1\}$ represent DFT vectors of the dimension $1 \times N_3$. During PMI feedback, a terminal feeds back codebook coefficients for obtaining or indicating $W_1$, $\tilde{W}_2$, and $W_f$.

However, the existing parameter definitions and parameter values of codebooks are mainly intended for the PMI of one TRP. Therefore, PMI parameter feedback in the related art is not applicable to scenarios of multi-TRP coordinated transmission.

## SUMMARY

Embodiments of this application provide a PMI feedback method for multi-TRP transmission, a terminal, and a network-side device, so as to solve the problem that the PMI parameter feedback method in the related art is not applicable to scenarios of multi-TRP coordinated transmission.

According to a first aspect, a PMI feedback method for multi-TRP transmission is provided, including: determining, by a terminal based on target parameters configured by a network side for a plurality of TRPs permitting joint transmission, an orthogonal beam group set corresponding to each TRP; selecting, based on channel information of each TRP, a target orthogonal beam group corresponding to the TRP from the orthogonal beam group set corresponding to the TRP, and selecting the predetermined quantity of target orthogonal beams corresponding to the TRP from the target orthogonal beam group; determining a first feedback parameter for feeding back target orthogonal beam groups corresponding to the plurality of TRPs and a second feedback parameter for feeding back the predetermined quantity of target orthogonal beams in each of the target orthogonal beam groups; where the first feedback parameter includes a first combinatorial number indicating the target orthogonal beam groups corresponding to the plurality of TRPs, and/or the second feedback parameter includes a second combinatorial number indicating the predetermined quantity of target orthogonal beams in each of the target orthogonal beam groups; and sending, by the terminal, a PMI parameter, where the PMI parameter includes the first feedback parameter and the second feedback parameter.

According to a second aspect, a PMI feedback apparatus for multi-TRP transmission is provided, including: a first determining module, configured to determine, based on target parameters configured by a network side for a plurality of TRPs permitting joint transmission, an orthogonal beam group set corresponding to each TRP; a selection module, configured to select, based on channel information of each TRP, a target orthogonal beam group corresponding to the TRP from the orthogonal beam group set corresponding to the TRP, and select the predetermined quantity of target orthogonal beams corresponding to the TRP from the target orthogonal beam group; a second determining module, configured to determine a first feedback parameter for feeding back target orthogonal beam groups corresponding to the plurality of TRPs and a second feedback parameter for feeding back the predetermined quantity of target orthogonal beams in each of the target orthogonal beam groups; where the first feedback parameter includes a first combinatorial number indicating the target orthogonal beam groups corresponding to the plurality of TRPs, and/or the second feedback parameter includes a second combinatorial number indicating the predetermined quantity of target orthogonal beams in each of the target orthogonal beam groups; and a first sending module, configured to send a PMI parameter, where the PMI parameter includes the first feedback parameter and the second feedback parameter.

According to a third aspect, a PMI obtaining method for multi-TRP transmission is provided, including: indicating, by a network-side device to a terminal, target parameters for a plurality of TRPs permitting joint transmission; receiving a PMI parameter from the terminal, where the PMI parameter includes a first feedback parameter and a second feedback parameter; where the first feedback parameter includes a first combinatorial number indicating the target orthogonal beam groups corresponding to the plurality of TRPs, and/or the second feedback parameter includes a second combinatorial number indicating the predetermined quantity of target orthogonal beams in each of the target orthogonal beam groups;

and obtaining, by the network-side device, a PMI for each TRP based on the PMI parameter.

According to a fourth aspect, a PMI obtaining apparatus for multi-TRP transmission is provided, including: a second sending module, configured to indicate to a terminal target parameters for a plurality of TRPs permitting joint transmission; a receiving module, configured to receive a PMI parameter from the terminal, where the PMI parameter includes a first feedback parameter and a second feedback parameter; where the first feedback parameter includes a first combinatorial number indicating the target orthogonal beam groups corresponding to the plurality of TRPs, and/or the second feedback parameter includes a second combinatorial number indicating the predetermined quantity of target orthogonal beams in each of the target orthogonal beam groups; and an obtaining module, configured to obtain a PMI for each TRP based on the PMI parameter.

According to a fifth aspect, a terminal is provided, where the terminal includes a processor and a memory, and a program or instructions are stored in the memory and capable of running on the processor, and when the program or instructions are executed by the processor, the steps of the method according to the first aspect are implemented.

According to a sixth aspect, a terminal is provided, including a processor and a communication interface, where the processor is configured to implement the steps of the method according to the first aspect, and the communication interface is configured to communicate with an external device.

According to a seventh aspect, a network-side device is provided. The network-side device includes a processor and a memory, and a program or instructions are stored in the memory and capable of running on the processor. When the program or instructions are executed by the processor, the steps of the method according to the third aspect are implemented.

According to an eighth aspect, a network-side device is provided, including a processor and a communication interface, where the processor is configured to implement the steps of the method according to the third aspect, and the communication interface is configured to communicate with an external device.

According to a ninth aspect, a PMI feedback system for multi-TRP transmission is provided, including a terminal and a network-side device, where the terminal can be configured to implement the steps of the method according to the first aspect, and the network-side device can be configured to implement the steps of the method according to the third aspect.

According to a tenth aspect, a readable storage medium is provided. A program or instructions are stored in the readable storage medium. When the program or instructions are executed by a processor, the steps of the method according to the first aspect or the steps of the method according to the third aspect are implemented.

According to an eleventh aspect, a chip is provided. The chip includes a processor and a communication interface, where the communication interface is coupled to the processor, and the processor is configured to run a program or instructions to implement the steps of the method according to the first aspect or the steps of the method according to the third aspect.

According to a twelfth aspect, a computer program/program product is provided. The computer program/program product is stored in a storage medium, and the computer program/program product is executed by at least one processor to implement the steps of the method according to the first aspect or the steps of the method according to the third aspect.

In the embodiments of this application, a terminal obtains, based on target parameters configured by a network side for a plurality of TRPs permitting joint transmission, an orthogonal beam group set corresponding to each TRP; selects, based on channel information of each TRP, a target orthogonal beam group corresponding to a TRP and selects a plurality of target orthogonal beams corresponding to each TRP from each of the target orthogonal beam groups; determines a first feedback parameter for feeding back the target orthogonal beam group corresponding to each TRP and a second feedback parameter for feeding back the predetermined quantity of target orthogonal beams in each of the target orthogonal beam groups; and sends a PMI parameter including the first feedback parameter and the second feedback parameter. In this way, PMI parameter feedback can be implemented in a case of multi-TRP transmission, thereby improving the performance of multi-TRP transmission.

**BRIEF DESCRIPTION OF DRAWINGS**

FIG. 1 is a block diagram of a wireless communication system to which embodiments of this application are applicable;
FIG. 2 is a schematic flowchart of a PMI feedback method for multi-TRP transmission according to an embodiment of this application;
FIG. 3 is a schematic flowchart of a PMI obtaining method for multi-TRP transmission according to an embodiment of this application;
FIG. 4 is another schematic flowchart of a PMI feedback method for multi-TRP transmission according to an embodiment of this application;
FIG. 5 is a schematic structural flowchart of a PMI feedback apparatus for multi-TRP transmission according to an embodiment of this application;

FIG. 6 is a schematic structural flowchart of a PMI obtaining apparatus for multi-TRP transmission according to an embodiment of this application;

FIG. 7 is a schematic structural diagram of a communication device according to an embodiment of this application;

FIG. 8 is a schematic diagram of a hardware structure of a terminal according to an embodiment of this application; and

FIG. 9 is a schematic structural diagram of a hardware structure of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict the quantity of objects. For example, there may be one or a plurality of first objects. In addition, "and/or" in the specification and claims represents at least one of connected objects, and the character "/" generally indicates that the associated objects have an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

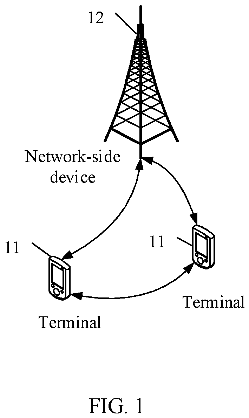

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device and/or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that in embodiments of this application, the core network device in an NR system is used only as an example, and the specific type of the core network device is not limited herein.

In the related art, R16 Type II codebook is designed based on a theory of beam combination. Considering the overhead problem of PMI feedback, frequency domain compression is introduced in the design of R16 Type II codebook, the largest quantity of supported ranks is extended to 4, and a Bitmap method is introduced to indicate the distribution of non-zero coefficients for PMI feedback.

Generation of codebook of each layer can be expressed by the following formula:

$$W = W_1 \widetilde{W}_2 W_f^H$$

$$W_1 = \begin{bmatrix} v_0 v_1 \dots v_{L-1} & 0 \\ 0 & v_0 v_1 \dots v_{L-1} \end{bmatrix}$$

where, and $v_i$, $i \in \{0,1, ..., L - 1\}$ represent discrete fourier transform (Discrete Fourier Transform, DFT) beam vectors of the dimension $N_1 N_2 \times 1$.

$$\widetilde{W}_2 = \begin{bmatrix} p_0^{(1)} & \cdots & 0 \\ \vdots & \ddots & \vdots \\ 0 & \cdots & p_{2L-1}^{(1)} \end{bmatrix} \begin{bmatrix} p_{0,0}^{(2)} \varphi_{0,0} & \cdots & p_{0,Mv-1}^{(2)} \varphi_{0,Mv-1} \\ \vdots & \ddots & \vdots \\ p_{2L-1,0}^{(2)} \varphi_{2L-1,0} & \cdots & p_{2L-1,Mv-1}^{(2)} \varphi_{2L-1,Mv-1} \end{bmatrix} .$$

Values of $p_i^{(1)}$, $i \in \{0,1, ..., L - 1\}$ are the same, which are the amplitude coefficient of a polarization direction r = 0. Values of $p_i^{(1)}$, $i \in \{L, L + 1, ...,2L - 1\}$ are the same, which are the amplitude coefficients of a polarization direction r = 1. $p_{i,m}^{(2)}$ and $\varphi_{i,m}$ are the amplitude coefficient and phase coefficient of tap m beam $i$. $W_f = [f_0 f_1 \dots f_{Mv-1}]$ and $f_i$, $i \in \{0,1, ..., Mv - 1\}$ represent DFT vectors of dimension $1 \times N_3$.

The terminal can feed back the codebook coefficients used to obtain or indicate $W_1, \bar{W}_2,$ and $W_f$ in the PMI. The network-side device can obtain $W_1$, $\bar{W}_2$, and $W_f$ based on the PMI fed back by the terminal.

(1) For $W_1$

Based on $i_{1,1}$ and $i_{1,2}$ in the PMI, L beam vectors $v_{m_1^{(i)}, m_2^{(i)}}, i =$ 0,1, ..., L - 1 are calculated. The method of determining the beam vector and subscripts $m_1^{(i)}, m_2^{(i)}$ is as follows:

$$u_m = \begin{cases} \begin{bmatrix} 1 & e^{j\frac{2\pi m}{O_2 N_2}} & \cdots & e^{j\frac{2\pi m(N_2-1)}{O_2 N_2}} \end{bmatrix} & N_2 > 1 \\ 1 & N_2 = 1 \end{cases}$$

$$v_{l,m} = \left[ u_m \quad e^{j\frac{2\pi l}{O_1 N_1}} u_m \quad \cdots \quad e^{j\frac{2\pi l(N_1-1)}{O_1 N_1}} u_m \right]^T$$

$$m_1^{(i)} = O_1 n_1^{(i)} + q_1$$

$$m_2^{(i)} = O_2 n_2^{(i)} + q_2$$

where, $[q_1, q_2]$ is obtained based on $i_{1,1}$ in the PMI by using the following calculation:

$$i_{1,1} = \begin{bmatrix} q_1 & q_2 \end{bmatrix}$$

$$q_1 \in \{0,1,\ldots,O_1-1\}$$

$$q_2 \in \{0,1,\ldots,O_2-1\}$$

where, $[n_1, n_2]$ is obtained based on $i_{1,2}$ in the PMI.

(2) For $\tilde{W}_2$

1) Calculating an amplitude of the largest coefficient

The largest coefficient in each polarization direction of layer $l$ is represented by $p_l^{(1)} = \begin{bmatrix} p_{l,0}^{(1)} & p_{l,1}^{(1)} \end{bmatrix}$, where a strong coefficient is quantized to 1 and therefore does not need to be reported, and the second largest coefficient is indicated by $i_{2,3,l}$ in the PMI, where $i_{2,3,l} = \begin{bmatrix} k_{l,p}^{(1)} \end{bmatrix}$, $p \in \{0,1\}$. Table 1 shows the rules of mapping from $k_{l,p}^{(1)}$ to $p_{l,p}^{(1)}$.

Table 1

| $k_{l,p}^{(1)}$ | $p_{l,p}^{(1)}$ |
|---|---|
| 0 | Reserved |
| 1 | $\dfrac{1}{\sqrt{128}}$ |
| 2 | $\left(\dfrac{1}{8192}\right)^{1/4}$ |
| 3 | $\dfrac{1}{8}$ |
| 4 | $\left(\dfrac{1}{2048}\right)^{1/4}$ |

(continued)

| $k_{l,p}^{(1)}$ | $p_{l,p}^{(1)}$ |
|---|---|
| 5 | $\dfrac{1}{2\sqrt{8}}$ |
| 6 | $\left(\dfrac{1}{512}\right)^{1/4}$ |
| 7 | $\dfrac{1}{4}$ |
| 8 | $\left(\dfrac{1}{128}\right)^{1/4}$ |
| 9 | $\dfrac{1}{\sqrt{8}}$ |
| 10 | $\left(\dfrac{1}{32}\right)^{1/4}$ |
| 11 | $\dfrac{1}{2}$ |
| 12 | $\left(\dfrac{1}{8}\right)^{1/4}$ |
| 13 | $\dfrac{1}{\sqrt{2}}$ |
| 14 | $\left(\dfrac{1}{2}\right)^{1/4}$ |
| 15 | 1 |

2) Calculating the amplitude and phase of each tap

The amplitude coefficient of each tap at layer$l$ is expressed as follows:

$$p_l^{(2)} = \left[ p_{l,0}^{(2)} \cdots p_{l,M_v-1}^{(2)} \right]$$

$$p_{l,f}^{(2)} = \left[ p_{l,0,f}^{(2)} \cdots p_{l,2L-1,f}^{(2)} \right]$$

It is determined based on $i_{2,4,l}$ in the PMI, and its value is expressed as follows:

$$i_{2,4,l} = \left[ k_{l,0}^{(2)} \ldots k_{l,M_v-1}^{(2)} \right]$$

$$k_{l,f}^{(2)} = \left[ k_{l,0,f}^{(2)} \ldots k_{l,2L-1,f}^{(2)} \right]$$

$$k_{l,i,f}^{(2)} \in \{0, \ldots, 7\}$$

where, rules of mapping from $k_{l,p}^{(1)}$ to $p_{l,p}^{(1)}$ are shown in Table 2.

**Table 2**

| $k_{l,i,f}^{(2)}$ | $p_{l,i,f}^{(2)}$ |
|---|---|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |
| 6 | $\dfrac{1}{\sqrt{2}}$ |
| 7 | 1 |

The phase of each tap at layer $l$ is quantized by 16-phase shift keying (Phase Shift Keying, PSK), and the coefficient is expressed as follows:

$$\varphi_{l,i,f} = e^{j\frac{2\pi c_{l,i,f}}{16}}$$

It is indicated by $i_{2,5,l}$ = [$c_{l,0}$ ... $c_{l,M_v-1}$] in the PMI, where $c_{l,f}$ = [$c_{l,0,f}$ ... $c_{l,2L-1,f}$], $c_{l,i,f} \in \{0, \ldots, 15\}$.

$i_{2,4,l}$ and $i_{2,5,l}$ only feed back the amplitude and phase of non-zero non-largest coefficients at layer $l$, where the distribution of non-zero coefficients is indicated by $i_{1,7,l}$ in a Bitmap mode. For coefficients in which $k_{l,i,f}^{(3)} = 0$, both the amplitude and phase are set to 0.

$$i_{1,7,l} = \left[ k_{l,0}^{(3)} \; ... \; k_{l,M_v-1}^{(3)} \right]$$

$$k_{l,f}^{(3)} = \left[ k_{l,0,f}^{(3)} \; ... \; k_{l,2L-1,f}^{(3)} \right]$$

$$k_{l,i,f}^{(3)} \in \{0,1\}$$

The beam index corresponding to the largest coefficient is $i_l^*$ , which can be calculated based on $i_{1,8,l}$. The formula is as follows:

$$i_{1,8,l} = \begin{cases} \sum_{i=0}^{i_1^*} k_{1,i,0}^{(3)} - 1 & v = 1 \\ i_l^* & 1 < v \le 4 \end{cases}$$

To be specific, if rank = 1, $i_{1,8,l}$ indicates that the strongest beam is the beam corresponding to the ( $i_l^*$ )-th non-zero coefficient; and if rank > 1, $i_{1,8,l}$ indicates that the strongest beam is the ( $i_l^*$ )-th beam.

During codebook calculation, the UE remaps each tap, with the tap index $f_l^*$ of the largest coefficient as a reference, and the tap index $f_l^*$ after the mapping becomes 0. Therefore, the position of the largest coefficient is known, together with its amplitude index $k_{l,i_l^*,0}^{(2)} = 7$ and phase coefficient $c_{l,i_l^*,0} = 0$ . In this case, no feedback is required from the UE.

(3) For $W_f^H$

$W_f^H$ contains *Mv* DFT vectors, and $M_v = \left\lceil p_v \frac{N_3}{R} \right\rceil$ can be expressed as $W_f^H = [y_{t,l}^{(0)} \; y_{t,l}^{(1)} \; ... \; y_{t,l}^{(M_v-1)}]^T$ and *t* = {0,1, ..., $N_3$ - 1}, where $N_3$ is the quantity of PMI subbands, namely, the total quantity of taps, and *Mv* is the quantity of reserved taps. The calculation formulas of $y_{t,l}^{(f)}$ , *f* = {0,1, ..., $M_v$ - 1} are as follows:

$$y_{t,l}^{(f)} = e^{j \frac{2\pi t n_{3,l}^{(f)}}{N_3}}$$

$$n_{3,l}^{(f)} \in \{0,1, ..., N_3 - 1\}$$

where $n_{3,l}^{(f)}$ is the index of *Mv* taps obtained by the UE after the remapping. The remapping rules are as follows:

$$n_{3,l}^{(f)} = \left( n_{3,l}^{(f)} - n_{3,l}^{(f_l^*)} \right) mod \; N_3$$

$$f = (f - f_l^*) \bmod M_v$$

where $f_l^*$ is the tap index of the largest coefficient, showing that $n_{3,l}^{(f_l^*)} = 0$ after the remapping.

When $N_3 \leq 19$, $n_{3,l}^{(1)}, \ldots, n_{3,l}^{(M_v-1)}$ is obtained based on $i_{1,6,l}$ in the PMI. If $M_v = 1$, $i_{1,6,l} = 0$ and no feedback is provided.

When $N_3 > 19$, $n_{3,l}^{(1)}, \ldots, n_{3,l}^{(M_v-1)}$ is obtained based on $i_{1,6,l}$ and $M_{initial}$ in the PMI. Only non-zero $n_{3,l}^{(f)}$ is fed back. $M_{initial} \in \{-2M_v + 1, 2M_v + 2, \ldots, 0\}$ can be obtained based on $i_{1,5}$ (note: layer common) in the following equation:

$$i_{1,5} = \begin{cases} M_{initial} & M_{initial} = 0 \\ M_{initial} + 2M_v & M_{initial} < 0 \end{cases}$$

The process of obtaining $i_{1,6,l}$ and $n_{3,l}^{(f)}$ is the same as that of obtaining indices of beams for $W_1$, that is, using a combinatorial number. $n_{3,l}^{(f)}$ greater than $M_{initial} + N3 - 1$ is mapped to $0, 1, \ldots, 2M_v - 1$ before a combinatorial number is calculated.

In the related art, PMI coefficients are $i_1$ and $i_2$, where $i_1$ includes $i_{1,1}, i_{1,2}, i_{1,5}, i_{1,6,v}, i_{1,7,v}$, and $i_{1,8,v}$, and $i_2$ includes $i_{2,3,v}, i_{2,4,v}$, and $i_{2,5,v}$, where a value of v is one or more of 1, 2, 3, and 4. If a value of RI is 2, v = 1,2; if the value of RI is 4, v = 1,2,3,4.

$i_{1,1}$ is used to indicate the index of an orthogonal DFT vector group, which is equal to $[q_1, q_2]$, where $q_1 \in \{0, 1, \ldots, O_1 - 1\}$, $q_2 \in \{0, 1, \ldots, O_2 - 1\}$, and $O_1, O_2$ are oversampling factors configured by the network;
$i_{1,2}$ is used to indicate indices of L vectors in the orthogonal DFT vector group indicated by $i_{1,1}$, which is equal to

$$i_{1,2} \in \{0, 1, \ldots, \binom{N_1 N_2}{L} - 1\}.$$

, where $N_1, N_2$ is a port quantity parameter configured by the network, L is the quantity of DFT vectors indicated by the network, and $\binom{N_1 N_2}{L}$ is a combinatorial number for selecting L beams from $N_1 N_2$ beams. Table 3 shows a mapping between $i_{1,2}$ and indices of L DFT vectors.

**Table 3**

| L to indices of $i_{1,2}$ DFT vectors | $$i_{1,2} = \sum_{i=0}^{L-1} \binom{N_1 N_2 - 1 - n^i}{L - i}$$ $n^i$ is a global index of a DFT vector, which is determined by indices $n_2^i$ and $n_1^i$. The value of $n^i$ increases with i. |
|---|---|
| $i_{1,2}$ to indices of L DFT vectors | This is a reverse process of L to indices of $i_{1,2}$ DFT vectors, and is described as follows. 1. Initialize $s_{-1}=0$; 2. Cycle from i=0 to L-1; a) Find the largest $x^*$, where $x^* \in \{L - 1 - i, \ldots, N_1 N_2 - 1 - i\}$, making $i_{1,2} - s_{i-1} \geq \binom{x^*}{L - i}$ hold. b) $e_i = \binom{x^*}{L - i}$ c) $s_i = s_{i-1} + e_i$ d) $n^i = N_1 N_2 - 1 - x^*$ |

(continued)

| | $$e) \quad n_1^i = n^i \bmod N_1 \text{, where mod means that a remainder is taken.}$$ $$f) \quad n_2^i = \frac{(n^i - n_1^i)}{N_1}$$ 3. End the cycle. |
|---|---|

$i_{1,5}$ indicates the starting position $M_{initial}$ of a window with a length of $2M_v$, with a value range of $i_{1,5} \in \{0,1,...,2M_v - 1\}$, where $M_v$ represents the quantity of time domain taps. Note: This exists only in the case of $N_3 > 19$. When $N_3 \leq 19$, $i_{1,5} = 0$ and the terminal does not need to feed back this coefficient.

$i_{1,6,v}$ is used to indicate the positions of $M_v$ tap coefficients fed back by layer (layer) v among $N_3$ tap coefficients, and its value range is either of the following two cases: when $N_3 > 19$, the value range is

$$i_{1,6,v} \in \left\{0,1,...,\binom{2M_v - 1}{M_v - 1} - 1\right\}$$ ; and when $N_3 \leq 19$, the value range is fed back as a combinatorial number expressed by $i_{1,6,v} \in \left\{0,1,...,\binom{N_3 - 1}{M_v - 1} - 1\right\}$ .

$i_{1,7,v}$ is a non-zero coefficient indicator of layer v, which is a bit (bit) sequence with a total length of $2LM_v$.

$i_{1,8,v}$ is an indicator of the largest coefficient of layer v, with a value range of $i_{1,8,v} \in \{0,1,...,2L - 1\}$. For transmission in the case of rank = 1, $i_{1,8,v}$ represents the $(i_{1,8,v})$-th non-zero coefficient, and for transmission in the case of rank > 1, $i_{1,8,v}$ represents the $(i_{1,8,v})$-th coefficient.

$i_{2,3,v}$ is a quantized indicator of two polarization amplitude coefficients of layer v. Each amplitude coefficient is a bit string (bit string) of 4 bits, and each codepoint (codepoint) corresponds to one quantized value, where the amplitude coefficient of the polarization with the largest coefficient is not fed back and assumed to be 1.

$i_{2,4,v}$ is a quantized indicator of amplitude coefficients of all tap coefficients of layer v. Each amplitude coefficient is a bit string of 3 bits, each codepoint corresponds to one quantized value, and a total of $2LM_v$ amplitude coefficients are obtained. The amplitude coefficient for the largest coefficient is not fed back and assumed to be 1, and the remaining coefficients only feed back non-zero amplitude coefficients. Therefore, a total of $K_{Nz,v} - 1$ coefficients are fed back at layer v, where $K_{Nz,v}$ represents the number of non-zero amplitude coefficients of Layer v.

$i_{2,5,v}$ is a quantized indicator of phase coefficients of all tap coefficients of layer v. Each coefficient is a bit string of 4 bits, each codepoint corresponds to one quantized value, and a total of $2LM_v$ phase coefficients are obtained. The phase coefficient for the largest coefficient is not fed back and assumed to be 0, and the remaining coefficients only feed back the phase coefficients corresponding to non-zero amplitude coefficients. Therefore, a total of $K_{NZ,v} - 1$ coefficients are fed back at layer v, where $K_{NZ,v}$ represents the quantity of non-zero amplitude coefficients.

Table 4 shows a specific mapping sequence of coefficients.

**Table 4**

| CSI part (part) | Content | Size |
|---|---|---|
| CSI part 1 | It indicates the number of non-zero coefficients of all layers $K_{NZ}$, and is used to determine the size of each PMI coefficient in Part 2. | The length is $\lceil \log_2 K_0 \rceil$ for rank 1 transmissions; and the length is $\lceil \log_2 2K_0 \rceil$ for transmissions with the rank being higher than 1, where $K_0 = \lceil \beta 2L M_0 \rceil$ . |

(continued)

| CSI part (part) | | Content | Size |
|---|---|---|---|
| CSI part 2 | Group (Group) 0 | $i_{,1,1}$, $i_{1,2}$, and $i_{1,8,v}$ | $i_{1,1}$: $\lceil \log_2 O_1 O_2 \rceil$ <br> $i_{1,2}$: $\left\lceil \log_2 \binom{N_1 N_2}{L} \right\rceil$ <br> $i_{1,8,v}$: $\lceil \log_2 K_{NZ} \rceil$ for transmissions with rank = 1; <br> $\lceil \log_2 2L \rceil$ <br> for transmissions with rank > 1 |
| | Group 1 | High-priority bits of $i_{2,3,v}$, $i_{1,5}$, $i_{1,6,1}$, and $i_{2,4,v}$, high-priority bits of $i_{2,5,v}$, and high-priority bits of $i_{1,7,v}$ | $i_{1,7,v}$: $rank * 2LM_v - \lfloor K_{NZ}/2 \rfloor$ <br> $i_{2,4,v}$ and $i_{2,5,v}$: $\lceil K_{NZ}/2 \rceil - v$ |
| | Group 2 | Low-priority bits of $i_{2,4,v}$, low-priority bits of $i_{2,5,v}$, and low-priority bits of $i_{1,7,v}$ | $i_{1,7,v}$: $\lfloor K_{NZ}/2 \rfloor$ <br> $i_{2,4,v}$ and $i_{2,5,v}$: $\lfloor K_{NZ}/2 \rfloor$ |

The priorities of bits of $i_{2,4,v}$, $i_{2,5,v}$, and $i_{1,7,v}$ are determined based on a priority value of each bit calculation. A smaller priority value means a higher priority. The calculation formula is as follows:

$$\mathrm{Pri}(l, i, f) = 2 * L * v * \pi(f) + v * i + l$$

where, $\pi(f) = min\left(2 * n_{3,l}^{(f)}, 2 * \left(N_3 - n_{3,l}^{(f)}\right) - 1\right)$ , $l = 0, 1, ..., rank, i = 0, 1, ..., 2L - 1$, and $f = 0, 1, ..., M_v - 1$.

According to the formula $\pi(f)$, its value range is $\pi(f) \in 0, 1, ..., N_3-1$, and the order of $n_{3,l}^{(f)}$ is 0, $N_3$ - 1, 1, $N_3$ - 2, 2, $N_3$ - 3 ... from a smaller value to a greater value.

According to the formula Pri(l, i, f), $\pi(f)$ has the highest weight, followed by i and then *l*. Therefore, the order of priorities from high to low is shown in Table 5.

**Table 5**

| | |
|---|---|
| Priority from high to low | 2L coefficients of the first layer in the 0th delay |
| | ... |
| | 2L coefficients of the (*l*)-th layer in the 0th delay |
| | 2L coefficients of the first layer in the ($N_3$ - 1)-th delay |
| | ... |
| | 2L coefficients of the (*l*)-th layer in the($N_3$ - 1)-th delay |
| | ... |

It can be learned that the existing parameter definitions and parameter values of R16 Type 2 codebook are mainly intended for a PMI for one TRP. Regarding the multi-TRP joint transmission, if spatial domain beams of each TRP need to be fed back, it cannot be directly used and there is a certain optimization space to reduce the feedback overhead. Therefore, feedback enhancement can be performed to reduce the feedback overhead.

The following describes in detail the PMI feedback solution for multi-TRP transmission provided in the embodiments of this application by using some embodiments and application scenarios thereof with reference to the accompanying drawings.

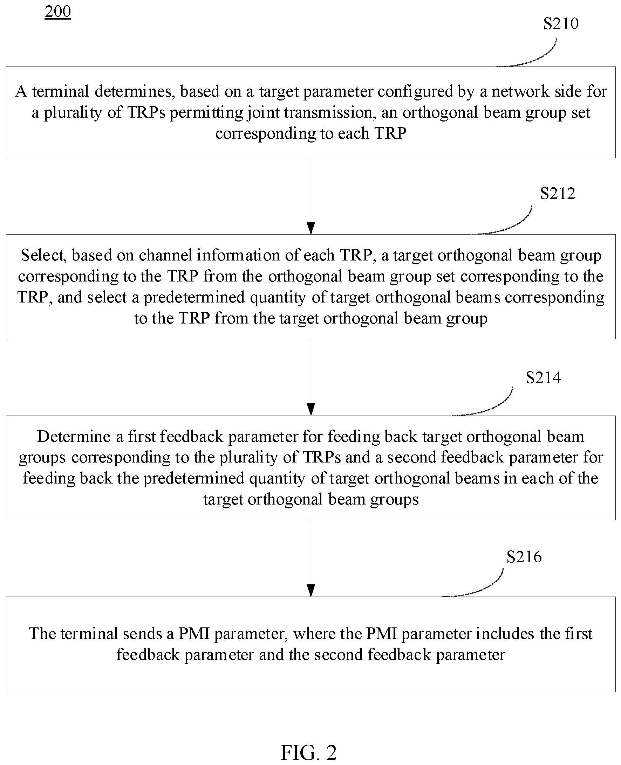

FIG. 2 is a schematic flowchart of a PMI feedback method for multi-TRP transmission according to an embodiment of this application. The method 200 may be performed by a terminal. In other words, the method may be performed by software or hardware installed on the terminal. As shown in FIG. 2, the method may include the following steps.

S210. A terminal determines, based on target parameters configured by a network side for a plurality of TRPs permitting joint transmission, an orthogonal beam group set corresponding to each TRP.

In the embodiment of this application, the network side may configure target parameters for the plurality of TRPs permitting joint transmission, where the target parameters may be indicated to the terminal through higher-layer signaling or configured for the terminal through higher-layer configuration signaling.

In a possible implementation, S210 may include the following steps 1 to 3.

Step 1. Obtain target parameters for each TRP.

In an optional implementation, the target parameters may include port configuration parameters of each TRP. Specifically, the target parameters may include port configuration parameters $N_{1,i}$ and $N_{2,i}$, where $N_{1,i}$ and $N_{2,i}$ are quantities of antenna ports respectively configured by the network side for TRP i in two dimensions of one polarization, TRP i is the (i+1)-th among the plurality of TRPs, and $i \in \{0,1, ..., N_{Ntrp} - 1\}$, $N_{Ntrp}$ being the quantity of the plurality of TRPs. the quantity $N_{Ntrp}$ of the plurality of TRPs may be predetermined or indicated by the network side.

In an optional implementation, the target parameters may include port configuration parameters of each TRP and the quantity $N_{Ntrp}$ of the plurality of TRPs. In other words, in this possible implementation, $N_{Ntrp}$ is configured by the network side, namely, the quantity of TRPs permitting joint transmission configured by the network side.

In the foregoing optional implementation, optionally, the network side may explicitly configure the quantity $N_{Ntrp}$ of TRPs permitting joint transmission, or may implicitly configure the quantity $N_{Ntrp}$ of TRPs permitting joint transmission. For example, the quantity $N_{Ntrp}$ of TRPs permitting joint transmission is implicitly indicated by configured target information. Therefore, in a possible implementation, that the terminal obtains the quantity $N_{Ntrp}$ of the plurality of TRPs may include one of the following:

(1) obtaining the quantity $N_{Ntrp}$ of the plurality of TRPs configured by the network side; for example, the network side may explicitly configure the quantity $N_{Ntrp}$ of the plurality of TRPs permitting joint transmission through configuration signaling;

(2) obtaining the quantity $N_{Ntrp}$ of the plurality of TRPs based on the configured target information, where the target information includes one of the following: channel measurement resource (CMR), transmission configuration indication (TCI), and higher-layer configuration signaling. For example, the quantity $N_{Ntrp}$ of the plurality of TRPs is determined based on the quantity of CMRs configured by the network side. For example, if the network side configures N CMRs for the terminal, $N_{Ntrp} = N$. Alternatively, the quantity $N_{Ntrp}$ of the plurality of TRPs may also be determined based on the quantity of TCIs configured by the network side. For example, if the network side configures M TCIs for the terminal, $N_{Ntrp} = M$. Alternatively, the quantity $N_{Ntrp}$ of the plurality of TRPs may also be obtained through higher-layer configuration signaling. For example, the network side can indicate the plurality of TRPs permitting joint transmission $N_{Ntrp}$ in higher-layer signaling codebook configuration information (codebook-config).

In a possible implementation, the network side may further configure the predetermined quantity corresponding to each TRP. Specifically, the target parameters may further include:
the predetermined quantity $L_i$ of target orthogonal beams, where $L_i$ is the predetermined quantity of target orthogonal beams corresponding to TRP i; or the predetermined total quantity L_total of target orthogonal beams, where L_total is a sum of quantities of target orthogonal beams corresponding to the plurality of TRPs.

Step 2. Obtain values of oversampling factors $O_{1,i}$ and $O_{2,i}$ corresponding to TRP i based on target parameters for TRP i and information indicated by higher-layer signaling or preset information, where TRP i is the (i+1)-th TRP among the plurality of TRPs, and $i \in \{0,1, ..., N_{Ntrp} - 1\}$, $N_{Ntrp}$ being the quantity of the plurality of TRPs.

Step 3. Obtain an orthogonal beam group set $\emptyset_i$ corresponding to TRP i based on the obtained values of the oversampling factors $O_{1,i}$ and $O_{2,i}$ corresponding to TRP i, where the orthogonal beam group set $\emptyset_i$ contains $O_{1,i} \times O_{2,i}$ orthogonal beam groups.

In a possible implementation, the network side may configure a set of target parameters uniformly for the TRPs, or may configure a set of target parameters respectively for each TRP. Therefore, the obtaining target parameters for each TRP includes one of the following.

(1) Obtain a set of target parameters configured by the network side uniformly for the plurality of TRPs, where the plurality of TRPs have the same target parameters. For example, the network side may uniformly configure a set of port configuration parameters $N_1$ and $N_2$ for the plurality of TRPs, indicating that the TRPs have the same port configuration parameters. That is, for all TRPs, the terminal adopts the port configuration parameters $N_1$ and $N_2$ for obtaining an orthogonal beam group set. For another example, the network side may uniformly configure the predetermined quantity L for the plurality of TRPs, indicating that the TRPs correspond to the same predetermined quantity. Alternatively, the network side may configure a set of target parameters uniformly for the plurality of TRPs: $N_1$, $N_2$, and L, indicating that the TRPs have the same port configuration parameters and corresponding predetermined quantity.

Optionally, in a case that the network side configures a set of target parameters uniformly for all the TRPs, because the plurality of TRPs have the same port configuration parameters $N_1$ and $N_2$, the oversampling factors $O_1$ and $O_2$ corresponding to the TRPs are also the same. Therefore, the network side can directly configure the oversampling factors $O_1$ and $O_2$ to save resources of the terminal. In view of this, in a possible implementation, the target parameters may also include the values of the oversampling factors $O_1$ and $O_2$, and the oversampling factors corresponding to TRP i satisfy that $O_{1,i} = O_1$ and $O_{2,i} = O_2$. That is, the TRPs adopt the values of the same group of oversampling factors $O_1$ and $O_2$.

(2) Obtain a set of target parameters configured by the network side respectively for each TRP, where each TRP corresponds to an independent set of target parameters and the target parameters configured by the network side for the TRPs are not completely the same. For example, the network side may configure a set of port configuration parameters $N_{1,i}$ and $N_{2,i}$ for TRP i among the plurality of TRPs, and the network side may configure a set of port configuration parameters $N_{1,j}$ and $N_{2,j}$ for TRP j (i is not equal to j) among the plurality of TRPs, where $N_{1,i}$ and $N_{2,i}$ may be the same as or different from $N_{1,j}$ and $N_{2,j}$. The terminal uses the port configuration parameters $N_{1,i}$ and $N_{2,i}$ to obtain an orthogonal beam group set for TRP i, and the terminal uses the port configuration parameters $N_{1,j}$ and $N_{2,j}$ to obtain an orthogonal beam group set for TRP j. For another example, $L_i$ is the predetermined quantity configured by the network side for TRP i among the plurality of TRPs, and $L_j$ is the predetermined quantity configured by the network side for TRP j among the plurality of TRPs, where $L_i$ and $L_j$ may be the same or different.

(3) For a plurality of TRPs, the network side may configure the predetermined total quantity L_total for all TRPs. The predetermined quantity $L_i$ associated with TRP i among the plurality of TRPs is determined by the terminal based on L_total.

S212. Select, based on channel information of each TRP, a target orthogonal beam group corresponding to the TRP from the orthogonal beam group set corresponding to the TRP, and select the predetermined quantity of target orthogonal beams corresponding to the TRP from the target orthogonal beam group.

In the embodiment of this application, the terminal can select, based on the channel information of each TRP, the target orthogonal beam group corresponding to the TRP from the orthogonal beam group set corresponding to the TRP, and select the predetermined quantity of target orthogonal beams corresponding to the TRP from the target orthogonal beam group.

The channel information of each TRP may be obtained by measuring a channel reference signal of each TRP by the terminal, and the terminal may select the corresponding target orthogonal beam group and the predetermined quantity of target orthogonal beams in the target orthogonal beam group based on the measurement result.

In a possible implementation, S212 may include:

step 1: obtaining orthogonal beam group indices $q_{1,i}$ and $q_{2,i}$ of TRP i based on channel information of TRP i, where TRP i is the (i+1)-th TRP among the plurality of TRPs, and $i \in \{0, 1, ..., N_{Ntrp} - 1\}$, $N_{Ntrp}$ being the quantity of the plurality of TRPs;

step 2: determining one target orthogonal beam group in the orthogonal beam group set $\varnothing_i$ corresponding to TRP i based on $q_{1,i}$ and $q_{2,i}$, where $0 \leq q_{1,i} \leq O_{1,i}$ and $0 \leq q_{2,i} \leq O_{2,i}$, and the target orthogonal beam group contains $N_{1,i} \times N_{2,i}$ orthogonal beams; and

step 3: obtaining $L_i$ target orthogonal beams corresponding to TRP i from the target orthogonal beam group based on the channel information of TRP i, where $L_i$ is the predetermined quantity corresponding to TRP i.

S214. Determine a first feedback parameter for feeding back target orthogonal beam groups corresponding to the plurality of TRPs and a second feedback parameter for feeding back the predetermined quantity of target orthogonal beams in each of the target orthogonal beam groups; where the first feedback parameter includes a first combinatorial number indicating the target orthogonal beam groups corresponding to the plurality of TRPs, and/or the second feedback parameter includes a second combinatorial number indicating the predetermined quantity of target orthogonal beams in each of the target orthogonal beam groups.

In the embodiment of this application, the first combinatorial number is used to indicate the target orthogonal beam groups corresponding to the plurality of TRPs, and/or the second combinatorial number is used to indicate the predetermined quantity of target orthogonal beams in each of the target orthogonal beam groups, so as to reduce the feedback overhead of spatial domain parameters in the PMI.

In a possible implementation, before the first feedback parameter and the second feedback parameter are obtained, indices of the target orthogonal beam group corresponding to each TRP and indices of target orthogonal beam corresponding to each TRP may be globally encoded. Therefore, before S214, the method may further include the following steps.

Step 1. Globally encode indices of the target orthogonal beam group corresponding to each TRP to obtain information of target orthogonal beam groups corresponding to the plurality of TRPs.

For example, taking any one TRP i as an example, the indices of the target orthogonal beam group corresponding to each TRP can be globally encoded using any one of the following methods:

(1) encoding indices $q_{1,i}$ and $q_{2,i}$ of the orthogonal beam groups of TRP i respectively as $q_1 = (i \times O_{1,i}) + q_{1,i}$ and $q_2 = q_{2,i}$;

(2) encoding indices $q_{1,i}$ and $q_{2,i}$ of the orthogonal beam groups of TRP i respectively as $q_2 = (i \times O_{2,i}) + q_{2,i}$ and $q_1 = q_{1,i}$;

(3) encoding indices $q_{1,i}$ and $q_{2,i}$ of the orthogonal beam groups of TRP i respectively as $q_1 = \sum_{k=0}^{i} O_{1,k} + q_{1,i}$ and $q_2 = q_{2,i}$; or

(4) encoding indices $q_{1,i}$ and $q_{2,i}$ of the orthogonal beam groups of TRP i respectively as $q_2 = \sum_{k=0}^{i} O_{2,k} + q_{2,i}$ and $q_1 = q_{1,i}$; where

$O_{1,k}$, $O_{2,k}$ represent oversampling factors of TRP k among the plurality of TRPs.

Step 2. Globally encode identification information of the $L_i$ target orthogonal beams corresponding to each TRP to obtain indices of target orthogonal beams corresponding to the plurality of TRPs, where the identification information is identification information of the target orthogonal beams in the target orthogonal beam group, and the identification information includes $m_i$ and $l_i$, where $m_i$ and $l_i$ are integers, and $0 \le m_i \le N_{2,i}$ and $0 \le l_i \le N_{1,i}$.

Optionally, $m_i$ may be a row number of the target orthogonal beams in the target orthogonal beam group, and $l_i$ may be a column number of the target orthogonal beams in the target orthogonal beam group.

For example, taking any one TRP i as an example, the target orthogonal beam information corresponding to each TRP can be globally encoded using any one of the following methods:

(1) encoding identification information of one of the $L_i$ target orthogonal beams of TRP i to obtain an index of the target orthogonal beam $m = (i * N_2) + m_i$, $l = l_i$;

(2) encoding identification information of one of the $L_i$ target orthogonal beams of TRP i to obtain an index of the target orthogonal beam $m = m_i$, $l = (i * N_1) + l_i$;

(3) encoding identification information of one of the $L_i$ target orthogonal beams of TRP i to obtain an index of the target orthogonal beam $m = \sum_{k=0}^{i} N_{2,k} + m_i$, $l = l_i$; or

(4) encoding identification information of one of the $L_i$ target orthogonal beams of TRP i to obtain an index of the target orthogonal beam $m = m_i$, $l = \sum_{k=0}^{i} N_{1,k} + l_i$; where

$N_{1,k}$, $N_{2,k}$ represent port configuration parameters of TRP k.

In a possible implementation, the determining the first combinatorial number that indicates the target orthogonal beam groups corresponding to the plurality of TRPs may include:

mapping the indices of the target orthogonal beam group corresponding to each TRP to the first combinatorial number $i_{1,1}$, where $i_{1,1}$ is used to indicate $N_{trp}$ vector group indices in an orthogonal vector group corresponding to the plurality of TRPs,

$$i_{1,1} \in \left\{0, 1, \ldots, \binom{\sum_{i=0}^{N_{trp}-1} O_{1,i} * O_{2,i}}{N_{trp}} - 1\right\}$$

and , where TRP i is the (i+1)-th TRP among the plurality of TRPs, $i \in \{0, 1, \ldots, N_{Ntrp} - 1\}$, $N_{Ntrp}$ being the quantity of the plurality of TRPs, $O_{1,i}$, $O_{2,i}$ are the obtained oversampling factors of the TRP i, $N_{trp}$ represents the quantity of the plurality of TRPs, and $\binom{\sum_{i=0}^{N_{trp}-1} O_{1,i} * O_{2,i}}{N_{trp}}$ is a combinatorial number for selecting $N_{trp}$ target orthogonal beam groups from $\sum_{i=0}^{N_{trp}-1} O_{1,i} * O_{2,i}$ orthogonal beam groups.

In a possible implementation, a mapping relationship between the first combinatorial number $i_{1,1}$ and the indices of the target orthogonal beam group corresponding to each TRP may include:

$$i_{1,1} = \sum_{i=0}^{N_{trp}-1} \binom{\sum_{i=0}^{N_{trp}-1} O_{1,i} * O_{2,i} - 1 - n^i}{N_{trp} - i}$$

, where $n^i = (\sum_{i=0}^{N_{trp}-1} O_{1,i}) * q_2^i + q_1^i$ or $n^i = O_1 * q_2^i + q_1^i$ $n^i$ is a global index of the i-th target orthogonal beam group, $0 \leq i \leq N_{trp} - 1$; $q_2^i$ indicates an index $q_2$ of a target beam group corresponding to the i-th TRP, and $q_1^i$ indicates an index $q_1$ of the target beam group corresponding to TRP i, where $0 \leq q_1 \leq (\sum_{i=0}^{N_{trp}-1} O_{1,i})$ and $0 \leq q_2 \leq O_2$, or $0 \leq q_1 \leq O_1$ and $0 \leq q_2 \leq (\sum_{i=0}^{N_{trp}-1} O_{2,i})$.

Optionally, if the TRPs have the same port configuration parameters, the values of the oversampling factors corresponding to the TRPs are also the same, which are assumed to be $O_1$ and $O_2$. In this case, the indices of the target orthogonal beam group corresponding to each TRP are mapped to the first combinatorial number $i_{1,1}$, where $i_{1,1}$ is used to indicate the indices of $N_{trp}$, of the orthogonal beam groups corresponding to the plurality of TRPs $i_{1,1} \in \{0,1,...,\binom{O_1 O_2 N_{trp}}{N_{trp}} - 1\}$, $O_1$ and $O_2$ are sampling factors, $N_{trp}$ represents the quantity of the plurality of TRPs, $\binom{O_1 O_2 N_{trp}}{N_{trp}}$ is a combinatorial number for selecting $N_{trp}$ target orthogonal beam groups from $O_1 * O_2 * N_{trp}$ orthogonal beam groups. A mapping relationship between the first combinatorial number $i_{1,1}$ and the indices of the target orthogonal beam group corresponding to each TRP may include:

$$i_{1,1} = \sum_{i=0}^{N_{trp}-1} \binom{O_1 O_2 N_{trp} - 1 - n^i}{N_{trp} - i},$$

where $n^i = O_1 * N_{trp} * q_2^i + q_1^i$ or $n^i = O_1 * q_2^i + q_1^i$ $n^i$ is a global index of the i-th target orthogonal beam group, $0 \leq i \leq N_{trp} - 1$; $q_2^i$ indicates an index $q_2$ of a target beam group corresponding to the i-th TRP, and $q_1^i$ indicates an index $q_1$ of the target beam group corresponding to the i-th TRP, where $0 \leq q_1 \leq O_1 * N_{trp}$ and $0 \leq q_2 \leq O_2$, or $0 \leq q_1 \leq O_1$ and $0 \leq q_2 \leq O_2 * N_{trp}$.

In a possible implementation, the determining the second combinatorial number that indicates the predetermined quantity of target orthogonal beams in each of the target orthogonal beam groups may include:

mapping indices of the predetermined quantity of the target orthogonal beam corresponding to each TRP to the second combinatorial number $i_{1,2}$, where $i_{1,2}$ is used to indicate indices of $\sum_{i=0}^{N_{trp}-1} L_i$ orthogonal beams in all target orthogonal beam groups indicated by the first combinatorial number, and $L_i$ is the predetermined quantity for TRP i.

Optionally, $i_{1,2} \in \{0,1,...,\binom{\sum_{i=0}^{N_{trp}-1} N_{1,i} * N_{2,i}}{\sum_{i=0}^{N_{trp}-1} L_i} - 1\}$, where $N_{1,i}$ and $N_{2,i}$ are the quantities of antenna ports respectively configured by the network side for TRP i in two dimensions of one polarization, and $\binom{\sum_{i=0}^{N_{trp}-1} N_{1,i} * N_{2,i}}{\sum_{i=0}^{N_{trp}-1} L_i}$ is a combinatorial number for selecting $\sum_{i=0}^{N_{trp}-1} L_i$ target orthogonal beams from $\sum_{i=0}^{N_{trp}-1} N_{1,i} N_{2,i}$ orthogonal beams.

Optionally, a mapping relationship between $i_{1,2}$ and the indices of $\sum_{i=0}^{N_{trp}-1} L_i$ target orthogonal beams includes:

$$i_{1,2} = \sum_{i=0}^{\sum_{i=0}^{N_{trp}-1} L_i - 1} \binom{\sum_{i=0}^{N_{trp}-1} N_{1,i} * N_{2,i} - 1 - n^i}{\sum_{i=0}^{N_{trp}-1} L_i - i},$$

*where,* $n^i = (\sum_{i=0}^{N_{trp}-1} N_{1,i}) * n_2^i + n_1^i$ or $n^i = N_1 * n_2^i + n_1^i$, where $n^i$ is a global index of the i-th target orthogonal beam, $0 \leq i \leq \sum_{i=0}^{N_{trp}-1} L_i - 1, n_2^i$ represents the index $m_i$ of the i-th target orthogonal beam (this index can be an index m of the i-th target orthogonal beam obtained after the foregoing global encoding), $n_1^i$ represents the index $l_i$ of the i-th target orthogonal beam (this index can be an index $l$ of the i-th target orthogonal beam obtained after the foregoing global encoding). $0 \leq m_i \leq N_2$ and $0 \leq l_i \leq (\sum_{i=0}^{N_{trp}-1} N_{1,i})$, or $0 \leq m_i \leq (\sum_{i=0}^{N_{trp}-1} N_{2,i})$ and $0 \leq l_i \leq N_1$.

In a possible implementation, if the TRPs have the same port configuration parameters, the values of the oversampling factors corresponding to the TRPs are also the same, which are assumed to be $O_1$ and $O_2$. In addition, the predetermined quantities corresponding to the TRPs $L_i$ are also the same. In this case, determining the second combinatorial number that indicates the predetermined quantity of target orthogonal beams in each of the target orthogonal beam groups may include: mapping indices of the predetermined quantity of target orthogonal beams corresponding to each TRP to the second combinatorial number $i_{1,2}$, where $i_{1,2}$ is used to indicate indices of $N_{trp}$ * L orthogonal beams in all target orthogonal beam groups indicated by the first combinatorial number, and L is the predetermined quantity.

$$i_{1,2} \in \{0, 1, \dots, \binom{N_1 N_2 N_{trp}}{L N_{trp}} - 1\},$$

where $N_1$ and $N_2$ are the quantities of antenna ports respectively configured by the network side for TRP i in two dimensions of one polarization, and $\binom{N_1 N_2 N_{trp}}{L N_{trp}}$ is a combinatorial number for selecting $L * N_{trp}$ target orthogonal beams from $N_1 * N_2 * N_{trp}$ orthogonal beams.

A mapping relationship between $i_{1,2}$ and the indices of $L * N_{trp}$ target orthogonal beams may include:

$$i_{1,2} = \sum_{i=0}^{L*N_{trp}-1} \binom{N_1 N_2 N_{trp} - 1 - n^i}{L * N_{trp} - i},$$

where $n^i = N_1 * N_{trp} * n_2^i + n_1^i$ or $n^i = N_1 * n_2^i + n_1^i$, where n' is a global index of the i-th target orthogonal beam, $0 \leq i \leq L * N_{trp} - 1$, $n_2^i$ represents an index m of the i-th target orthogonal beam, and $n_1^i$ represents an index $l$ of the i-th target orthogonal beam, where $0 \leq m \leq N_2$ and $0 \leq l \leq N_1 * N_{trp}$, or $0 \leq m \leq N_2 * N_{trp}$ and $0 \leq l \leq N_1$.

S216. The terminal sends a PMI parameter, where the PMI parameter includes the first feedback parameter and the second feedback parameter.

In the embodiment of this application, the terminal can send the PMI parameter in the form of a multi-TRP channel state information (Channel State Information, CSI) report, and the network side can obtain the PMI fed back by the terminal based on the received PMI parameter.

In a possible implementation, before S216, the method may further include the following steps.

Step 1. Obtain a configuration parameter of the network side to obtain the quantity of delay information corresponding to each TRP. In this step, the quantity of delay information corresponding to each TRP is obtained based on the configuration parameter of the network side.

Step 2. Obtain delay information of the plurality of TRPs based on the quantity of delay information corresponding to each TRP, where the PMI parameter further includes the delay information of the plurality of TRPs. In this step, the terminal can determine the quantity of delay information to be obtained and obtain the corresponding quantity of delay information based on the quantity of delay information corresponding to each TRP.

In a possible implementation, if the quantity of delay information corresponding to each TRP is different, the delay information of the plurality of TRPs based on the maximum quantity of delay information corresponding to the plurality of TRPs.

For example, the terminal can obtain network configuration parameters and calculate the quantity of delay information fed back by the terminal, where the quantity may be the same or different for all TRPs. The terminal obtains the delay information of the plurality of TRPs based on the quantity of delay information, where the delay information is represented by a DFT vector or other vectors. Optionally, when the quantity of delay information obtained by the terminal is different for each TRP, the terminal obtains the delay information of the plurality of TRPs based on the maximum value.

In a possible implementation, the terminal may further obtain a feedback coefficient for feeding back a coefficient matrix of the PMI, so the PMI parameter may further include the feedback coefficient.

Optionally, the terminal may set an amplitude of a TRP corresponding to the largest coefficient in the coefficient matrix as a reference value, where an amplitude of the largest coefficient of another TRP among the plurality of TRPs is quantized based on the reference value to obtain an amplitude quantization coefficient between the TRPs.

For example, assuming that the amplitude of the TRP corresponding to the largest coefficient is 1, the terminal quantizes the amplitudes of the largest coefficients of other TRPs based on the largest coefficient, and feeds back the corresponding TRP amplitude quantization coefficients. For example, $i_{2,6,v}$ is a quantized indicator of amplitude coefficients of the largest coefficient of $N_{trp}$ TRPs at layer (layer) v. Each amplitude coefficient is a bit string (bit string) of 4 bits, and can indicate 16 quantization grades. Each codepoint (codepoint) corresponds to one quantized value, where the amplitude coefficient of the polarization with the largest coefficient is not fed back and is assumed to be 1.

In a possible implementation, when sending the PMI parameter, the terminal may map the PMI parameter to channel state information CSI for sending, where the amplitude quantization coefficient between the TRPs is mapped to a second part of the CSI, before a polarization amplitude indicator in the PMI parameter or between the polarization amplitude indicator and a window indicator in the PMI parameter.

For example, the terminal maps the amplitude quantization coefficient between TRPs in Group 2 of CSI Part 2 for feedback, and the mapping is performed before a polarization amplitude indicator $i_{2,3,v}$, or between the polarization amplitude indicator $i_{2,3,v}$ and a window indicator $i_{1,5}$.

In the technical solution provided in the embodiment of this application, for a multi-TRP joint transmission scheme, if feedback of spatial domain beams of each TRP is required, a combinatorial number can be used for global index feedback, so as to reduce the feedback overhead. In addition, feedback of amplitudes between TRPs can further improve the quantization accuracy, helping improve the precoding performance.

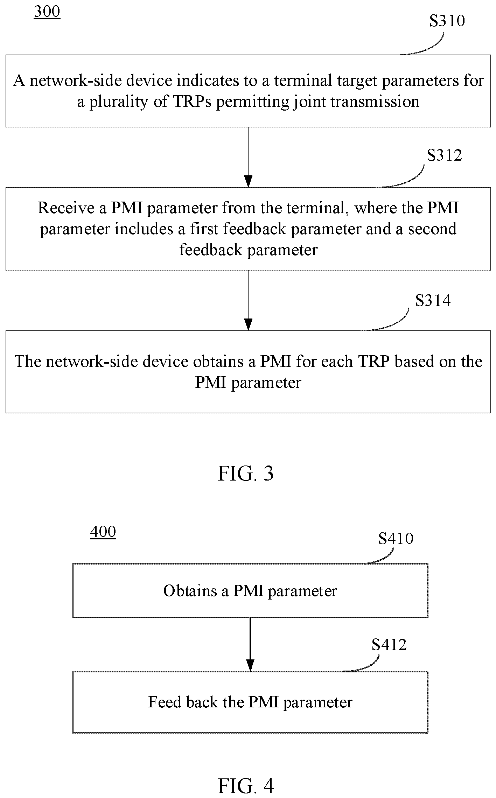

FIG. 3 is a schematic flowchart of a PMI obtaining method for multi-TRP transmission according to an embodiment of this application, and the method 300 may be performed by a network-side device. In other words, the method may be performed by software or hardware installed on the network-side device. As shown in FIG. 3, the method mainly includes the following steps.

S310. A network-side device indicates to a terminal target parameters for a plurality of TRPs permitting joint transmission.

The target parameters are the same as those in the method 200. For details, refer to the description in the method 200.

Optionally, the target parameters include:

(1) port configuration parameters $N_{1,i}$ and $N_{2,i}$, where $N_{1,i}$ and $N_{2,i}$ are quantities of antenna ports respectively configured by the network side for TRP i in two dimensions of one polarization; or
(2) the port configuration parameters $N_{1,i}$ and $N_{2,i}$, and the quantity $N_{Ntrp}$ of the plurality of TRPs; where

TRP i is the (i+1)-th TRP among the plurality of TRPs, and i ∈ {0,1, ... , $N_{Ntrp}$ - 1}.

In a possible implementation, the target parameters may further include the predetermined quantity $L_i$ of target orthogonal beams, where $L_i$ is the predetermined quantity of target orthogonal beams corresponding to TRP i.

In a possible implementation, the target parameters may further include the predetermined total quantity L_total of target orthogonal beams, where L_total is a sum of quantities of target orthogonal beams corresponding to the plurality of TRPs.

In a possible implementation, that the network-side device indicates to terminal the quantity $N_{Ntrp}$ of the plurality of TRPs includes:

(1) configuring, by the network-side device, the quantity $N_{Ntrp}$ of the plurality of TRPs for the terminal; or
(2) indicating, by the network-side device, the quantity $N_{Ntrp}$ of the plurality of TRPs based on configured target information, where the target information includes one of the following: CMR, TCI, and higher-layer configuration signaling.

In a possible implementation, that a network-side device indicates to a terminal target parameters for a plurality of TRPs permitting joint transmission includes:

> configuring, by the network-side device, a set of target parameters uniformly for the plurality of TRPs to indicate that the plurality of TRPs have the same target parameters; or
> configuring, by the network-side device, a set of target parameters respectively for each TRP to indicate the set of target parameters corresponding to each TRP, where the target parameters configured for the TRPs are not completely the same.

S312. Receive a PMI parameter from the terminal, where the PMI parameter includes a first feedback parameter and a second feedback parameter; where the first feedback parameter includes a first combinatorial number indicating the target orthogonal beam groups corresponding to the plurality of TRPs, and/or the second feedback parameter includes a second combinatorial number indicating the predetermined quantity of target orthogonal beams in each of the target orthogonal beam groups.

The terminal may send the PMI parameter in the manner described in the method 200. For details, refer to the description in the method 200. Details are not repeated herein.

S314. The network-side device obtains a PMI for each TRP based on the PMI parameter.

For example, the network obtains an index of a corresponding orthogonal beam group based on the first feedback parameter. If the first feedback parameter is a combinatorial number, demapping needs to be performed based on a formula of mapping from indices to combinatorial numbers to obtain the index of the corresponding orthogonal beam group, and then demapping is performed based on the reported second feedback parameter to obtain an index of an orthogonal beam. A spatial domain (spatial domain, SD) matrix of the PMI is obtained based on the index of the orthogonal beam group and the index of the orthogonal beam by using a predefined formula. Then, the PMI for the plurality of TRPs is obtained by multiplying frequency domain (frequency domain, FD) matrix information and coefficient matrix information reported by the UE or using a predefined formula.

In the technical solution provided in the embodiment of this application, in a scenario of multi-TRP joint transmission, the network-side device can obtain the PMI for each TRP based on the PMI parameter reported by the terminal, thereby improving the system performance.

FIG. 4 is another schematic flowchart of a PMI feedback method for multi-TRP transmission according to an embodiment of this application. As shown in FIG. 4, the method 400 mainly includes the following steps.

S410. Obtains a PMI parameter.

S412: Feed back the PMI parameter.

Optionally, obtaining a PMI parameter may include obtaining a spatial domain (spatial domain, SD) parameter.

Optionally, obtaining a spatial domain parameter may include:

> step 1: obtaining orthogonal beam group information; and
> step 2: obtaining beam information based on the orthogonal beam group information.

The orthogonal beam group information and orthogonal beam information can be obtained in the following manners.

> (1) Orthogonal beam group information of each TRP permitting JT transmission is obtained separately. The TRP permitting JT transmission may be one of the TRPs selected by the terminal to provide CSI feedback for JT transmission, or one of the TRPs indicated by the network side through higher-layer signaling to provide CSI feedback for JT transmission.

Optionally, the orthogonal beam group information of each TRP permitting JT transmission can be obtained in the following manner.

For any TRP, port configuration parameters $N_1$ and $N_2$ of the TRP are obtained based on higher-layer signaling, where $N_1$ and $N_2$ can respectively represent quantities of antenna ports in two dimensions (for example, horizontal dimension and vertical dimension) of the TRP in one polarization, and oversampling factors $O_1$ and $O_2$ of beams in the two dimensions are determined based on the quantities of ports in the two dimensions. Then, indices of orthogonal beam groups $0 \leq q_1 \leq O_1$ and $0 \leq q_2 \leq O_2$ are obtained based on a channel for the TRP. An orthogonal beam group in an orthogonal beam group set $\emptyset$ is determined based on $q_1$ and $q_1$, where the orthogonal beam group set $\emptyset$ contains $O_1 \times O_2$ orthogonal beam groups. The orthogonal beam may be a column vector or other vectors of a DFT matrix.

In summary, orthogonal beam group information can be obtained, where the orthogonal beam group information contains indices of orthogonal groups $q_1$ and $q_2$ corresponding to $N_{trp}$ TRPs.

(2) Orthogonal beam information of each TRP permitting JT transmission is obtained separately.

Optionally, the orthogonal beam information of each TRP permitting JT transmission can be obtained in the following manner.

For any TRP, an orthogonal beam group in an orthogonal beam group set $\varnothing$ is determined based on $q_1$ and $q_2$, where the orthogonal beam group set $\varnothing$ contains $O_1 \times O_2$ orthogonal beam groups, and the orthogonal beam group contains $N_1 \times N_2$ orthogonal beams. Then, the specified quantity L of orthogonal beam indication information is obtained based on the channel for this TRP, where each indication information includes $0 \le m \le N_2$ and $0 \le 1 \le N_1$, and L is obtained through network higher-layer signaling.

In summary, the orthogonal beam information can be obtained, where the orthogonal beam information contains $N_{trp} * L$ pieces of orthogonal beam indication information for $N_{trp}$ TRPs, and $N_{trp}$ represents the quantity of TRPs permitting JT transmission.

(3) Orthogonal beam group information of each TRP permitting JT transmission is obtained jointly.

Optionally, the orthogonal beam group information of each TRP permitting JT transmission can be obtained jointly in the following manner.

First, quantity configuration parameters of ports and TRPs $N_1$, $N_2$, and $N_{trp}$ are obtained based on higher-layer signaling. For any TRP, $N_1$ and $N_2$ can respectively represent quantities of antenna ports in two dimensions (for example, horizontal dimension and vertical dimension) of the TRP in one polarization, and oversampling factors $O_1$ and $O_2$ of beams in the two dimensions are determined based on the quantities of ports in the two dimensions and $N_{trp}$. Then, a plurality of orthogonal beam group sets $\varnothing_i$ are determined based on the port configuration and oversampling factors of all TRPs, where $i \in \{0, 1, ... , N_{trp} - 1\}$ and $N_{trp}$ represents the quantity of TRPs permitting JT transmission. indices of orthogonal beam groups $q_{1\_i}$ and $q_{2\_i}$ are obtained from the orthogonal beam group set $\varnothing_i$ based on the channel for TRP i, where $i \in \{0, 1, ... , N_{trp}\}$, $0 \le q_{1\_i} \le O_1$, and $0 \le q_{2\_i} \le O_2$. Then, the orthogonal group indices of all TRPs are globally encoded.

For example, the orthogonal beam group indices of TRP i $q_{1\_i}$ and $q_{2\_i}$ may be encoded as $q_1 = (i \times O_1) + q_{1\_i}$ and $q_2 = q_{2\_i}$; or the orthogonal beam group indices of TRP i $q_{1\_i}$ and $q_{2\_i}$ are encoded as $q_2 = (i \times O_2) + q_{2\_i}$ and $q_1 = q_{1\_i}$.

The obtained orthogonal beam group information includes orthogonal group indices $q_1$ and $q_2$ corresponding to $N_{trp}$ TRPs.

(4) Orthogonal beam information of each TRP permitting JT transmission is obtained jointly.

Optionally, the orthogonal beam information of each TRP permitting JT transmission can be obtained jointly in the following manner.

For all TRPs, an orthogonal beam group $G_i$ is determined based on $q_1$ and $q_2$ of TRP i, where $i \in \{0, 1, ..., N_{trp} - 1\}$, and the orthogonal beam group includes $N_1 \times N_2$ orthogonal beams. For the orthogonal beam group $G_i$, the specified quantity L of orthogonal beam indication information is obtained based on the associated channel for this TRP, where each indication information includes $0 < m_i \le N_2$ and $0 \le l_i \le N_l$, and L is obtained through network higher-layer signaling. Then, the orthogonal group indication information of all TRPs is globally encoded.

For example, one of the L pieces of orthogonal beam indication information associated with TRP i is encoded as: $m = (i \times N_2) + m_i$, and $l = l_i$; or one of the L pieces of orthogonal beam indication information associated with TRP i is encoded as: $m = m_i$, $l = (i \times N_1) + l_i$.

In summary, the obtained orthogonal beam information contains $N_{trp} * L$ pieces of orthogonal beam indication information (m, 1) for $N_{trp}$ TRPs, and $N_{trp}$ represents the quantity of TRPs permitting JT transmission.

In a possible implementation, when the beam information is obtained based on the orthogonal beam group and network indication, the network indicates that beam quantities for all TRPs are not completely the same, that is, the values of L corresponding to all TRPs are not completely the same. Alternatively, the network indicates that the beam quantities for all TRPs are the same, that is, the values of L corresponding to all TRPs are the same.

In a possible implementation, feeding back a PMI parameter may include feeding back an SD (spatial domain, spatial domain) parameter.

Optionally, feeding back an SD parameter may include:

step 1: feeding back orthogonal beam group information; and
step 2: feeding back orthogonal beam information.

Optionally, feeding back orthogonal beam information may include feeding back the orthogonal beam group information of each TRP.

For example, feedback is performed using a parameter $i_{1,1,t}$, where $t = 0, 1, ..., N_{trp} - 1$ and t=0 is associated with the first measurement signal resource port group/measurement signal resource/measurement signal resource group /TRP, t=1 is associated with the second measurement signal resource port group/measurement signal resource/measurement signal resource group /TRP, and so on. The parameter $i_{1,1,t}$ includes $q_1$ and $q_2$, where $0 \le q_1 \le O_1$ and $0 \le q_2 \le O_2$. The network obtains $N_{trp}$ $q_1$ and $q_2$ based on the parameter $i_{1,1,t}$, determines orthogonal beam groups selected for each TRP according to a predefined order, and obtains orthogonal beam groups selected by the terminal.

Alternatively, a combinatorial number is used to feed back the orthogonal beam group information of all TRPs. For example, the orthogonal beam group information of all TRPs is mapped to a combinatorial number.

For example, feedback is performed using a parameter $i_{1,1}$, where $i_{1,1}$ is used to indicate the indices of $N_{trp}$ vector groups in all orthogonal vector groups and

$$i_{1,1} \in \{0,1, \dots, \binom{O_1 O_2 N_{trp}}{N_{trp}} - 1\}$$

. ($O_1, O_2$ are beam oversampling parameters, and $N_{trp}$ represents the quantity of TRPs permitting JT transmission. $\binom{O_1 O_2 N_{trp}}{N_{trp}}$ is a combinatorial number for selecting $N_{trp}$ orthogonal beam groups from $O_1 O_2 N_{trp}$ orthogonal groups. A mapping between $i_{1,1}$ and $N_{trp}$ orthogonal beam group indices is as follows:

$$i_{1,1} = \sum_{i=0}^{N_{trp}-1} \binom{O_1 O_2 N_{trp} - 1 - n^i}{N_{trp} - i}$$

$$n^i = O_1 * N_{trp} * q_2^i + q_1^i$$

or

$$n^i = O_1 * q_2^i + q_1^i$$

$n^i$ is a global index of a beam group, which is determined by indices $q_2^i$ and $q_1^i$. The value of $n^i$ increases with $i$, and $0 \le i \le N_{trp} - 1$. $q_2^i$ indicates the beam group index $q_2$ corresponding to the i-th TRP, and $q_1^i$ indicates the beam group index $q_1$ corresponding to the i-th TRP, where $0 \le q_1 \le O_1 N_{trp}$ and $0 \le q_2 \le O_2$, or $0 \le q_1 \le O_1$ and $0 \le q_2 \le O_2 N_{trp}$.

The network demaps the combinatorial number $i_{1,1}$ to obtain $N_{trp}$ beam group indices $q_1$ and $q_2$, and obtains $N_{trp}$ orthogonal beam groups selected by the terminal.

Optionally, feeding back orthogonal beam information may include feeding back the orthogonal beam information of each TRP respectively by using combinatorial numbers.

For example, feedback is performed using a parameter $i_{1,2,t}$, where $t = 0,1, \dots, N_{trp} - 1$ and t=0 is associated with the first measurement signal resource port group/measurement signal resource/measurement signal resource group /TRP, t=1 is associated with the second measurement signal resource port group/measurement signal resource/measurement signal resource group /TRP, and so on. $i_{1,2,t}$ is used to indicate indices of L vectors in the orthogonal beam group indicated by $i_{1,1,t}$ $i_{1,2,t} \in \{0,1, \dots, \binom{N_1 N_2}{L} - 1\}$, where $N_1 N_2$ are port quantity parameters configured by the network, L is the quantity of beams indicated by the network, and $\binom{N_1 N_2}{L}$ is a combinatorial number for selecting L beams from $N_1 * N_2$ beams. A mapping between $i_{1,2,t}$ and L orthogonal beam indices is as follows:

$$i_{1,2,t} = \sum_{i=0}^{L-1} \binom{N_1 N_2 - 1 - n^i}{L - i}$$

$$n^i = N_1 n_2^i + n_1^i$$

$n^i$ is a global index of a beam, which is determined by indices $n_2^i$ and $n_1^i$. The value of $n^i$ increases with i, and $0 <= i <= L-1$. $n_2^i$ represents the beam index m, and $n_1^i$ represents the beam index l, where $0<=m<= N2$ and $0<=1<= N1$.

The network side demaps the combinatorial number $i_{1,2,t}$ to obtain $N_{trp} * L$ m and $l$, and obtains $N_{trp} * L$ orthogonal beams selected by the terminal.

Alternatively, a combinatorial number may be used to feed back the orthogonal beam information of all TRPs. For example, the orthogonal beam information of all TRPs is mapped to a combinatorial number.

For example, feedback is performed using a parameter $i_{1,2}$, where $i_{1,2}$ is used to indicate the indices of $N_{trp} * L$

$$i_{1,2} \in \left\{0, 1, \ldots, \binom{N_1 N_2 N_{trp}}{L N_{trp}} - 1\right\},$$

orthogonal vectors in all orthogonal beam groups indicated by $i_{1,1,t}$ or $i_{1,1}$.

where $N_1 N_2$ are port quantity parameters configured by the network, L is the quantity of beams indicated by the network,

and $\binom{N_1 N_2 N_{trp}}{L N_{trp}}$ is a combinatorial number for selecting $L * N_{trp}$ beams from $N_1 * N_2 * N_{trp}$ beams (beam). A mapping between $i_{1,2}$ and $L * N_{trp}$ orthogonal beam indices is as follows:

$$i_{1,2} = \sum_{i=0}^{L*N_{trp}-1} \binom{N_1 N_2 N_{trp} - 1 - n^i}{L * N_{trp} - i}$$

$$n^i = N_1 * N_{trp} * n_2^i + n_1^i$$

or

$$n^i = N_1 * n_2^i + n_1^i$$

$n^i$ is a global index of an orthogonal beam, which is determined by indices $n_2^i$ and $n_1^i$. The value of $n^i$ increases with i, and $0 \le i \le L * N_{trp} - 1$. $n_2^i$ indicates the beam group index m corresponding to the i-th orthogonal beam, and $n_1^i$ indicates the beam group index l corresponding to the i-th orthogonal beam, where $0 \le m \le N_2$ and $0 \le l \le N_l * N_{trp}$, or $0 \le m \le N_2 * N_{trp}$ and $0 \le l \le N_l$.

The network side demaps the combinatorial number $i_{1,2}$ to obtain $N_{trp} * L$ m and l, and obtains $N_{trp} * L$ orthogonal beams selected by the terminal.

In a possible implementation, a frequency domain or delay domain (Frequency domain/Delay domain) parameter may further be obtained through obtaining PMI parameters.

Optionally, obtaining frequency domain or delay domain may include the following steps.

Step 1. Obtain network configuration parameters and calculate the quantity of delay information fed back by the terminal.

Optionally, the quantity may be the same for all TRPs, or the quantity may not be completely the same for all TRP.

Step 2. The terminal obtains the delay information of the plurality of TRPs based on the quantity of delay information, where the delay information is represented by a DFT vector or other vectors.

Optionally, when the quantity of delay information obtained by the terminal is different for each TRP, the terminal obtains the delay information of the plurality of TRPs based on the maximum value.

In a possible implementation, feeding back a PMI parameter may also include feeding back a coefficient matrix corresponding to the delay domain and the spatial domain.

Optionally, feeding back a coefficient matrix corresponding to the delay domain and the spatial domain may include the following steps.

Step 1. Assuming that the amplitude of the TRP corresponding to the largest coefficient is 1, the terminal quantizes the amplitudes of the largest coefficients of other TRPs based on the largest coefficient, and feeds back the corresponding TRP amplitude quantization coefficients.

For example, $i_{2,6,v}$ is a quantized indicator of amplitude coefficients of the largest coefficient of $N_{trp}$ TRPs at layer v. Each amplitude coefficient is a bit string of 4 bits, and can indicate 16 quantization grades. Each codepoint corresponds to one quantized value, where the amplitude coefficient of the polarization with the largest coefficient is not fed back and is assumed to be 1.

Step 2. The terminal maps the amplitude quantization coefficient between TRPs in Group 2 of CSI Part 2 for feedback, and the mapping is performed before a polarization amplitude indicator $i_{2,3,v}$, or between the polarization amplitude indicator $i_{2,3,v}$ and a window indicator $i_{1,5}$.

In the foregoing method, for a multi-TRP joint transmission scheme, if feedback of spatial domain beams of each TRP is required, a combinatorial number is used for global index feedback, so as to reduce the feedback overhead. In addition, feedback of amplitudes between TRPs can further improve the quantization accuracy, helping improve the precoding performance.

The PMI feedback method for multi-TRP transmission provided in the embodiment of this application may be performed by a PMI feedback apparatus for multi-TRP transmission. In this embodiment of this application, the PMI feedback apparatus for multi-TRP transmission according to this embodiment of this application is described by using an example in which the PMI feedback apparatus for multi-TRP transmission performs the PMI feedback method for multi-TRP transmission.

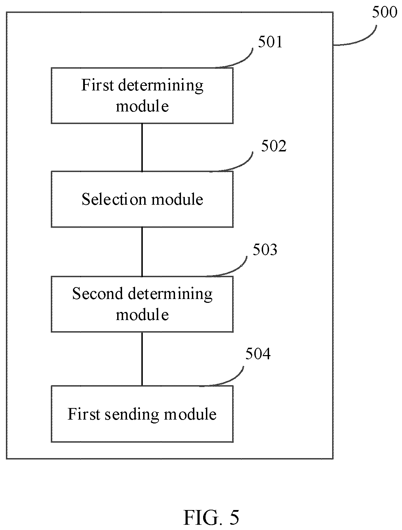

FIG. 5 is a schematic structural flowchart of a PMI feedback apparatus for multi-TRP transmission according to an embodiment of this application. As shown in FIG. 5, the apparatus 500 mainly includes a first determining module 501, a selection module 502, a second determining module 503, and a first sending module 504.

In the embodiment of this application, the first determining module 501 is configured to determine, based on target parameters configured by a network side for a plurality of TRPs permitting joint transmission, an orthogonal beam group set corresponding to each TRP; the selection module 502 is configured to select, based on channel information of each TRP, a target orthogonal beam group corresponding to the TRP from the orthogonal beam group set corresponding to the TRP, and select the predetermined quantity of target orthogonal beams corresponding to the TRP from the target orthogonal beam group; the second determining module 503 is configured to determine a first feedback parameter for feeding back target orthogonal beam groups corresponding to the plurality of TRPs and a second feedback parameter for feeding back the predetermined quantity of target orthogonal beams in each of the target orthogonal beam groups; where the first feedback parameter includes a first combinatorial number indicating the target orthogonal beam groups corresponding to the plurality of TRPs, and/or the second feedback parameter includes a second combinatorial number indicating the predetermined quantity of target orthogonal beams in each of the target orthogonal beam groups; and the first sending module 504 is configured to send a PMI parameter, where the PMI parameter includes the first feedback parameter and the second feedback parameter.

In a possible implementation, that the first determining module 501 determines an orthogonal beam group set corresponding to each TRP based on target parameters configured by a network side for a plurality of TRPs includes:

obtaining target parameters for each TRP;
obtaining values of oversampling factors $O_{1,i}$ and $O_{2,i}$ corresponding to TRP i based on target parameters for TRP i and information indicated by higher-layer signaling or preset information, where TRP i is the (i+1)-th TRP among the plurality of TRPs, and $i \in \{0, 1, \dots, N_{Ntrp} - 1\}$, $N_{Ntrp}$ being the quantity of the plurality of TRPs; and
obtaining an orthogonal beam group set $\varnothing_i$ corresponding to TRP i based on the obtained values of the oversampling factors $O_{1,i}$ and $O_{2,i}$ corresponding to TRP i, where the orthogonal beam group set $\varnothing_i$ contains $O_{1,i} \times O_{2,i}$ orthogonal beam groups.

In a possible implementation, the target parameters include:

port configuration parameters $N_{1,i}$ and $N_{2,i}$, where $N_{1,i}$ and $N_{2,i}$ are quantities of antenna ports respectively configured by the network side for TRP i in two dimensions of one polarization; or
the port configuration parameters $N_{1,i}$ and $N_{2,i}$, and the quantity $N_{Ntrp}$ of the plurality of TRPs.

In a possible implementation, the target parameters further include:
the predetermined quantity $L_i$ of target orthogonal beams, where $L_i$ is the predetermined quantity of target orthogonal beams corresponding to TRP i; or the predetermined total quantity L total of target orthogonal beams, where L_total is a sum of quantities of target orthogonal beams corresponding to the plurality of TRPs.

In a possible implementation, that the first determining module 501 obtains the quantity $N_{Ntrp}$ of the plurality of TRPs includes:

obtaining the quantity $N_{Ntrp}$ of the plurality of TRPs configured by the network side; or
obtaining the quantity $N_{Ntrp}$ of the plurality of TRPs based on configured target information, where the target information includes one of the following: channel measurement resource (channel measurement resource, CMR), transmission configuration indication TCI, and higher-layer configuration signaling.

In a possible implementation, that the first determining module 501 obtains target parameters for each TRP includes:

obtaining a set of target parameters configured by the network side uniformly for the plurality of TRPs, indicating that the plurality of TRPs have the same target parameters; or

obtaining a set of target parameters configured by the network side respectively for each TRP to indicate the set of target parameters corresponding to each TRP, where the target parameters configured by the network side for the TRPs are not completely the same.

In a possible implementation, in a case that the network side configures a set of target parameters uniformly for the TRPs, the target parameters further include values of oversampling factors $O_1$ and $O_2$, and the oversampling factors corresponding to TRP i satisfy that $O_{1,i} = O_1$ and $O_{2,i} = O_2$.

In a possible implementation, that the selection module 502 selects, based on channel information of each TRP, a target orthogonal beam group corresponding to the TRP from the orthogonal beam group set corresponding to the TRP, and selects the predetermined quantity of target orthogonal beams corresponding to the TRP from the target orthogonal beam group includes:

obtaining orthogonal beam group indices $q_{1,i}$ and $q_{2,i}$ of TRP i based on channel information of TRP i, where TRP i is the (i+1)-th TRP among the plurality of TRPs, and $i \in \{0, 1, ..., N_{Ntrp} - 1\}$, $N_{trp}$ being the quantity of the plurality of TRPs;

determining one target orthogonal beam group in the orthogonal beam group set $\emptyset_i$ corresponding to TRP i based on $q_{1,i}$ and $q_{2,i}$, where $0 \leq q_{1,i} \leq O_{1,i}$ and $0 \leq q_{2,i} \leq O_{2,i}$, and the target orthogonal beam group contains $N_{1,i} \times N_{2,i}$ orthogonal beams; and

obtaining $L_i$ target orthogonal beams corresponding to TRP i from the target orthogonal beam group based on the channel information of TRP i, where $L_i$ is the predetermined quantity corresponding to TRP i.

In a possible implementation, the second determining module is further configured to:

globally encode indices of the target orthogonal beam group corresponding to each TRP to obtain information of target orthogonal beam groups corresponding to the plurality of TRPs; and

globally encode identification information of the $L_i$ target orthogonal beams corresponding to each TRP to obtain indices of target orthogonal beams corresponding to the plurality of TRPs, where the identification information is identification information of the target orthogonal beams in the target orthogonal beam group, and the identification information includes $m_i$ and $l_i$, where $m_i$ and $l_i$ are integers, and $0 \leq m_i \leq N_{2,i}$ and $0 \leq l_i \leq N_{1,i}$.

In a possible implementation, the globally encoding indices of the target orthogonal beam group corresponding to each TRP includes one of the following:

encoding indices $q_{1,i}$ and $q_{2,i}$ of the orthogonal beam groups of TRP i respectively as $q_1 = (i \times O_{1,i}) + q_{1,i}$ and $q_2 = q_{2,i}$;

encoding indices $q_{1,i}$ and $q_{2,i}$ of the orthogonal beam groups of TRP i respectively as $q_2 = (i \times O_{2,i}) + q_{2,i}$ and $q_1 = q_{1,i}$;

encoding indices $q_{1,i}$ and $q_{2,i}$ of the orthogonal beam groups of TRP i respectively as $q_1 = \sum_{k=0}^{i} O_{1,k} + q_{1,i}$ and $q_2 = q_{2,i}$; or

encoding indices $q_{1,i}$ and $q_{2,i}$ of the orthogonal beam groups of TRP i respectively as $q_2 = \sum_{k=0}^{i} O_{2,k} + q_{2,i}$ and $q_1 = q_{1,i}$; where

$O_{1,k}, O_{2,k}$ represent oversampling factors of TRP k among the plurality of TRPs.

In a possible implementation, the globally encoding identification information of the Li target orthogonal beams corresponding to each TRP includes one of the following:

encoding identification information of one of the $L_i$ target orthogonal beams of TRP i to obtain an index of the target orthogonal beam $m = (i * N_2) + m_i$, $l = l_i$; or

encoding identification information of one of the $L_i$ target orthogonal beams of TRP i to obtain an index of the target orthogonal beam $m = m_i$, $l = (i * N_1) + l_i$;

encoding identification information of one of the $L_i$ target orthogonal beams of TRP i to obtain an index of the target orthogonal beam $m = \sum_{k=0}^{i} N_{2,k} + m_i$, $l = l_i$; or

encoding identification information of one of the $L_i$ target orthogonal beams of TRP i to obtain an index of the target orthogonal beam $m = m_i$, $l = \sum_{k=0}^{i} N_{1,k} + l_i$; where

$N_{1,k}, N_{2,k}$ represent port configuration parameters of TRP k.

In a possible implementation, that the second determining module 503 determines the first combinatorial number that indicates the target orthogonal beam groups corresponding to the plurality of TRPs may includes:

mapping the indices of the target orthogonal beam group corresponding to each TRP to the first combinatorial number $i_{1,1}$, where $i_{1,1}$ is used to indicate $N_{trp}$ vector group indices in an orthogonal vector group corresponding to the plurality of TRPs,

$$i_{1,1} \in \left\{0,1,...,\binom{\sum_{i=0}^{N_{trp}-1} O_{1,i} * O_{2,i}}{N_{trp}} - 1\right\}$$

and , where TRP i is the (i+1)-th TRP among the plurality of TRPs, $i \in \{0,1,...,N_{Ntrp} - 1\}$, $N_{Ntrp}$ being the quantity of the plurality of TRPs, $O_{1,i}, O_{2,i}$ are the obtained oversampling factors of the TRP

i, $N_{trp}$ represents the quantity of the plurality of TRPs, and $\binom{\sum_{i=0}^{N_{trp}-1} O_{1,i} * O_{2,i}}{N_{trp}}$ combinatorial number for selecting

$N_{trp}$ target orthogonal beam groups from $\sum_{i=0}^{N_{trp}-1} O_{1,i} * O_{2,i}$ orthogonal beam groups.

In a possible implementation, a mapping relationship between the first combinatorial number $i_{1,1}$ and the indices of the target orthogonal beam group corresponding to each TRP includes:

$$i_{1,1} = \sum_{i=0}^{N_{trp}-1} \binom{\sum_{i=0}^{N_{trp}-1} O_{1,i} * O_{2,i} - 1 - n^i}{N_{trp} - i},$$

where $n^i = (\sum_{i=0}^{N_{trp}-1} O_{1,i}) * q_2^i + q_1^i$ or $n^i = O_1 * q_2^i + q_1^i$, $n^i$ is a global index of the i-th target orthogonal beam

group, $0 \leq i \leq N_{trp} - 1$; $q_2^i$ indicates an index $q_2$ of a target beam group corresponding to the i-th TRP, and $q_1^i$ indicates

an index $q_1$ of the target beam group corresponding to TRP i, where $0 \leq q_1 \leq (\sum_{i=0}^{N_{trp}-1} O_{1,i})$ and $0 \leq q_2 \leq O_2$, or $0 \leq$

$q_1 \leq O_1$ and $0 \leq q_2 \leq (\sum_{i=0}^{N_{trp}-1} O_{2,i})$.

In a possible implementation, that the second determining module 503 determines the second combinatorial number that indicates the predetermined quantity of target orthogonal beams in each of the target orthogonal beam groups includes:

mapping indices of the predetermined quantity of target orthogonal beams corresponding to each TRP to a second combinatorial number $i_{1,2}$, where $i_{1,2}$ is used to indicate indices of $\sum_{i=0}^{N_{trp}-1} L_i$ target orthogonal beams in all target orthogonal beam groups indicated by the first combinatorial number, and $L_i$ is the predetermined quantity of target orthogonal beams of TRP i.

$$i_{1,2} \in \left\{0,1,...,\binom{\sum_{i=0}^{N_{trp}-1} N_{1,i} * N_{2,i}}{\sum_{i=0}^{N_{trp}-1} L_i} - 1\right\}$$

In a possible implementation, , where $N_{1,i}$ and $N_{2,i}$ are the quantities of antenna ports respectively configured by the network side for TRP i in two dimensions of one polarization, and

$\binom{\sum_{i=0}^{N_{trp}-1} N_{1,i} * N_{2,i}}{\sum_{i=0}^{N_{trp}-1} L_i}$ represents a combinatorial number selecting $\sum_{i=0}^{N_{trp}-1} L_i$ target orthogonal beams from

$\sum_{i=0}^{N_{trp}-1} N_{1,i} N_{2,i}$ orthogonal beams.

In a possible implementation, a mapping relationship between $i_{1,2}$ and the indices of $\sum_{i=0}^{N_{trp}-1} L_i$ target orthogonal beams includes:

$$i_{1,2} = \sum_{i=0}^{\sum_{i=0}^{N_{trp}-1} L_i - 1} \binom{\sum_{i=0}^{N_{trp}-1} N_{1,i} * N_{2,i} - 1 - n^i}{\sum_{i=0}^{N_{trp}-1} L_i - i},$$

where $n^i = (\sum_{i=0}^{N_{trp}-1} N_{1,i}) * n_2^i + n_1^i$, or $n^i = N_1 * n_2^i + n_1^i$, $n^i$ is a global index of the i-th target orthogonal beam, $0 \le i \le \sum_{i=0}^{N_{trp}-1} L_i - 1$, $n_2^i$ represents an index $m_i$ of the i-th target orthogonal beam, and $n_1^i$ represents an index $l_i$ of the i-th target orthogonal beam, where $0 \le m_i \le N_2$ and $0 \le l_i \le (\sum_{i=0}^{N_{trp}-1} N_{1,i})$, or $0 \le m_i \le (\sum_{i=0}^{N_{trp}-1} N_{2,i})$ and $0 \le l_i \le N_1$.

In a possible implementation, the second determining module 503 is further configured to:

obtain a configuration parameter of the network side to obtain the quantity of delay information corresponding to each TRP; and
obtain delay information of the plurality of TRPs based on the quantity of delay information corresponding to each TRP, where the PMI parameter further includes the delay information of the plurality of TRPs.

In a possible implementation, different TRPs have different quantities of delay information.
In a possible implementation, the obtaining delay information of the plurality of TRPs based on the quantity of delay information includes obtaining the delay information of the plurality of TRPs based on the maximum quantity of delay information corresponding to the plurality of TRPs.
In a possible implementation, the second determining module 503 is further configured to:
obtain a feedback coefficient for feeding back a coefficient matrix of the PMI, where the PMI parameter further includes the feedback coefficient.
In a possible implementation, that the second determining module 503 obtains a feedback coefficient for feeding back a coefficient matrix of the PMI includes:
setting an amplitude of a TRP corresponding to the largest coefficient in the coefficient matrix to a reference value, where an amplitude of the largest coefficient of another TRP among the plurality of TRPs is quantized based on the reference value to obtain an amplitude quantization coefficient between the TRPs.
In a possible implementation, that the first sending module 504 sends the PMI parameter includes: mapping the PMI parameter to CSI for sending, where the amplitude quantization coefficient between the TRPs is mapped to a second part of the CSI, before a polarization amplitude indicator in the PMI parameter or between the polarization amplitude indicator and a window indicator in the PMI parameter.
The PMI feedback apparatus for multi-TRP transmission according to the embodiment of this application may be an electronic device, for example, an electronic device with an operating system, or may be a component in an electronic device, for example, an integrated circuit or a chip. The electronic device may be a terminal or another device except the terminal. For example, the terminal may include but is not limited to a type of the foregoing terminal 11, and another device may be a server, a network attached storage (Network Attached Storage, NAS), or the like, which is not specifically limited in the embodiments of this application.
The PMI feedback apparatus for multi-TRP transmission provided in this embodiment of this application can implement the processes implemented by the terminal in the method embodiments illustrated in FIG. 2 to FIG. 4, with the same technical effects. To avoid repetition, details are not described herein again.

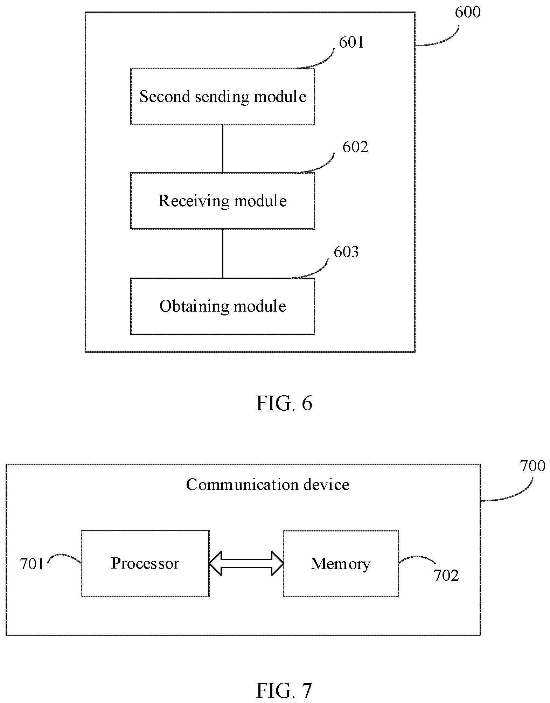

FIG. 6 is a schematic structural flowchart of a PMI obtaining apparatus for multi-TRP transmission according to an embodiment of this application. As shown in FIG. 6, the apparatus 600 mainly includes a second sending module 601, a receiving module 602, and an obtaining module 603.
In the embodiment of this application, the second sending module 601 is configured to indicate to a terminal target parameters for a plurality of TRPs permitting joint transmission; the receiving module 602 is configured to receive a PMI parameter from the terminal, where the PMI parameter includes a first feedback parameter and a second feedback parameter; where the first feedback parameter includes a first combinatorial number indicating the target orthogonal beam groups corresponding to the plurality of TRPs, and/or the second feedback parameter includes a second combinatorial number indicating the predetermined quantity of target orthogonal beams in each of the target orthogonal beam groups; and the obtaining module 603 is configured to obtain a PMI for each TRP based on the PMI parameter.
In a possible implementation, the target parameters include:

port configuration parameters $N_{1,i}$ and $N_{2,i}$, where $N_{1,i}$ and $N_{2,i}$ are quantities of antenna ports respectively configured by the network side for TRP i in two dimensions of one polarization; or
the port configuration parameters $N_{1,i}$ and $N_{2,i}$, and the quantity N_Ntrp of the plurality of TRPs; where
TRP i is the (i+1)-th TRP among the plurality of TRPs, and $i \varepsilon \{0,1,...,N\_Ntrp-1\}$.

In a possible implementation, the target parameters further include:

the predetermined quantity $L_i$ of target orthogonal beams, where $L_i$ is the predetermined quantity of target orthogonal beams corresponding to TRP i; or the predetermined total quantity L_total of target orthogonal beams, where L_total is a sum of quantities of target orthogonal beams corresponding to the plurality of TRPs.

In a possible implementation, the indicating to terminal the quantity $N_{Ntrp}$ of the plurality of TRPs includes:

configuring, by the network-side device, the quantity $N_{Ntrp}$ of the plurality of TRPs for the terminal; or indicating, by the network-side device, the quantity $N_{Ntrp}$ of the plurality of TRPs based on configured target information, where the target information includes one of the following: channel measurement resource CMR, transmission configuration indication TCI, and higher-layer configuration signaling.

In a possible implementation, the indicating to a terminal target parameters for a plurality of TRPs permitting joint transmission includes:

configuring a set of target parameters uniformly for the plurality of TRPs to indicate that the plurality of TRPs have the same target parameters; or configuring a set of target parameters respectively for each TRP to indicate the set of target parameters corresponding to each TRP, where the target parameters configured for the TRPs are not completely the same.

The PMI obtaining apparatus for multi-TRP transmission provided in this embodiment of this application can implement the processes implemented by the network side or the network-side device in the method embodiments illustrated in FIG. 2 to FIG. 4, with the same technical effects. To avoid repetition, details are not described herein again.

Optionally, as shown in FIG. 7, an embodiment of this application further provides a communication device 700 including a processor 701 and a memory 702, and a program or instructions are stored in the memory 702 and capable of running on the processor 701. For example, in a case that the communication device 700 is a terminal, when the program or instructions are executed by the processor 701, the steps in the foregoing embodiments of the PMI feedback method for multi-TRP transmission are implemented, with the same technical effects achieved. In a case that the communications device 700 is a network-side device, when the program or instructions are executed by the processor 701, the steps in the forgoing embodiments of the PMI obtaining method for multi-TRP transmission are implemented, with the same technical effects achieved. To avoid repetition, details are not described herein again.

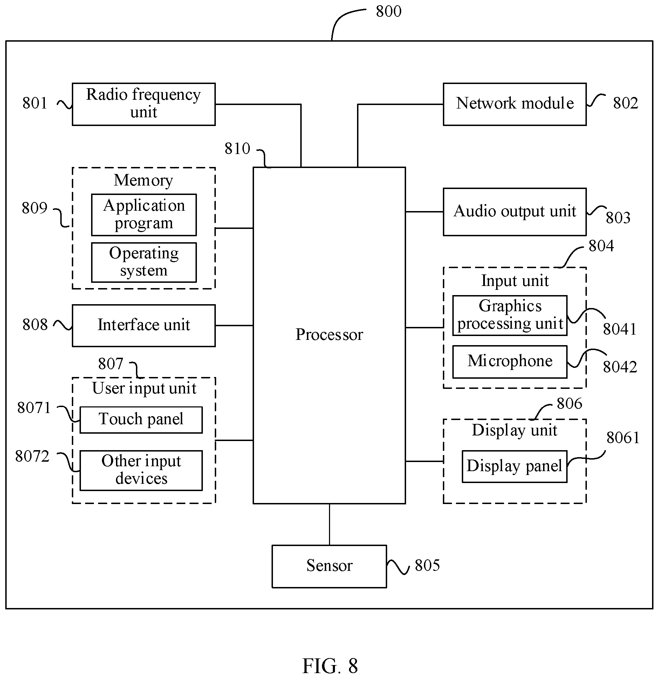

An embodiment of this application further provides a terminal, including a processor and a communication interface, where the processor is configured to implement the steps in the foregoing embodiments of the PMI feedback method for multi-TRP transmission, and the communication interface is configured to communicate with an external device. This terminal embodiment corresponds to the foregoing method embodiments used on the terminal side. All processes and implementations in the foregoing method embodiments are applicable to this terminal embodiment, with the same technical effects achieved. Specifically, FIG. 8 is a schematic diagram of a hardware structure of a terminal implementing the embodiments of this application.

The terminal 800 includes but is not limited to at least some components of a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the terminal 800 may further include a power source (for example, a battery) for supplying power to the components. The power source may be logically connected to the processor 810 through a power management system. In this way, functions such as charge management, discharge management, and power consumption management are implemented by using the power management system. The structure of the terminal shown in FIG. 8 does not constitute a limitation on the terminal. The terminal may include more or fewer components than shown in the figure, or combine some components, or have a different component arrangement. Details are not described herein.

It should be understood that in this embodiment of this application, the input unit 804 may include a graphics processing unit (Graphics Processing Unit, GPU) 8041 and a microphone 8042. The GPU8041 processes image data of a static picture or a video that is obtained by an image capture apparatus (for example, a camera) in a video capture mode or an image capture mode. The display unit 806 may include a display panel 8061. The display panel 8061 may be configured in a form of a liquid crystal display, an organic light-emitting diode, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a functional button (such as a volume control button or a power on/off button), a trackball, a mouse, and a joystick. Details are not described herein again.

In the embodiments of this application, after receiving downlink data from the network-side device, the radio frequency circuit 801 may transmit it to the processor 810 for processing. In addition, the radio frequency circuit 801 may transmit uplink data to the network-side device. Generally, the radio frequency unit 801 includes but is not limited to an antenna, an amplifier, a transceiver, a coupler, a low noise amplifier, a duplexer, and the like.

The memory 809 may be configured to store software programs or instructions, and various data. The memory 809 may mainly include a first storage area where the programs or instructions are stored and a second storage area where data is stored. The first storage area may store an operating system, an application program or instructions required by at least one function (for example, an audio playing function or an image playing function), and the like. Further, the memory 809 may include a volatile memory or nonvolatile memory, or the memory 809 may include both volatile and nonvolatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 809 in this embodiment of this application includes but is not limited to these and any other suitable types of memories.

The processor 810 may include one or more processing units. Optionally, the processor 810 integrates an application processor and a modem processor. The application processor mainly processes operations involving an operating system, a user interface, an application program, and the like. The modem processor mainly processes wireless communication signals, for example, a baseband processor. It can be understood that the modem processor may alternatively be not integrated in the processor 810.

The processor 810 is configured to:

determine, based on target parameters configured by a network side for a plurality of TRPs permitting joint transmission, an orthogonal beam group set corresponding to each TRP;
select, based on channel information of each TRP, a target orthogonal beam group corresponding to the TRP from the orthogonal beam group set corresponding to the TRP, and select the predetermined quantity of target orthogonal beams corresponding to the TRP from the target orthogonal beam group;
determine a first feedback parameter for feeding back target orthogonal beam groups corresponding to the plurality of TRPs and a second feedback parameter for feeding back the predetermined quantity of target orthogonal beams in each of the target orthogonal beam groups; where the first feedback parameter includes a first combinatorial number indicating the target orthogonal beam groups corresponding to the plurality of TRPs, and/or the second feedback parameter includes a second combinatorial number indicating the predetermined quantity of target orthogonal beams in each of the target orthogonal beam groups.

The radio frequency unit 801 is configured to send a PMI parameter, where the PMI parameter includes the first feedback parameter and the second feedback parameter.

An embodiment of this application further provides a network-side device, including a processor and a communication interface, where the processor is configured to implement the steps in the foregoing embodiments of the PMI obtaining method for multi-TRP transmission, and the communication interface is configured to communicate with an external device. The network-side device embodiment is corresponding to the foregoing method embodiments applied to the network-side device. All the implementation processes and implementation methods of the foregoing method embodiments can be applied to the network-side device embodiment, with the same technical effects achieved.

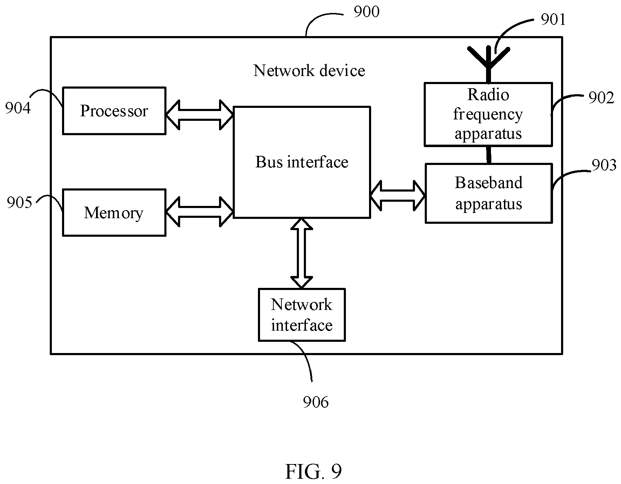

Specifically, an embodiment of this application further provides a network-side device. As shown in FIG. 9, the network-side device 900 includes an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information by using the antenna 901, and transmits the received information to the baseband apparatus 903 for processing. In a downlink direction, the baseband apparatus 903 processes to-be-transmitted information, and transmits the information to the radio frequency apparatus 902; and the radio frequency apparatus 902 processes the received information and then transmits the information by using the antenna 901.

The method performed by the network-side device in the foregoing embodiment may be implemented in the baseband apparatus 903, and the baseband apparatus 903 includes a baseband processor.

For example, the baseband apparatus 903 may include at least one baseband processing unit, where a plurality of chips are disposed on the baseband processing unit. As shown in FIG. 9, one of the chips is, for example, the baseband processor, and connected to the memory 905, to invoke a program in the memory 905 to perform the operations of the network device shown in the foregoing method embodiment.

The network-side device may further include a network interface 906, where the interface is, for example, a common public radio interface (common public radio interface, CPRI).

Specifically, the network-side device 900 according to the embodiment of this application further includes a program or instructions stored in the memory 905 and capable of running on the processor 904. The processor 904 invokes the program or instructions in the memory 905 to implement the method performed by each module shown in FIG. 6, and the same technical effects are achieved. To avoid repetition, details are not described herein again.

An embodiment of this application further provides a readable storage medium, where the readable storage medium stores a program or instructions, and when the program or instructions are executed by a processor, the processes of the foregoing embodiments of the PMI feedback method for multi-TRP transmission are implemented or the processes of the foregoing embodiments of the PMI obtaining method for multi-TRP transmission are implemented, with the same technical effects achieved. To avoid repetition, details are not described herein again.

The processor is the processor in the terminal in the foregoing embodiments. The readable storage medium includes a computer-readable storage medium, for example, a computer read-only memory, a random access memory, a magnetic disk, or an optical disc.

An embodiment of this application further provides a chip, where the chip includes a processor and a communication interface, the communication interface is coupled to the processor, and the processor is configured to run a program or an instruction to implement the processes of the foregoing embodiments of the PMI feedback method for multi-TRP transmission or the processes of the foregoing embodiments of the PMI obtaining method for multi-TRP transmission, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium. The computer program/program product is executed by at least one processor to implement the processes of the foregoing embodiments of the PMI feedback method for multi-TRP transmission or the processes of the foregoing embodiments of the PMI obtaining method for multi-TRP transmission, with the same technical effects achieved. To avoid repetition, details are not described herein again.

An embodiment of this application further provides a PMI feedback system for multi-TRP transmission, including a terminal and a network-side device, where the terminal can be configured to implement the steps of the foregoing PMI feedback method for multi-TRP transmission according to the first aspect, and the network-side device can be configured to implement the steps of the foregoing PMI obtaining method for multi-TRP transmission.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. A precoding matrix indicator PMI feedback method for multi-transmission reception point TRP transmission, comprising:

   determining, by a terminal based on target parameters configured by a network side for a plurality of TRPs permitting joint transmission, an orthogonal beam group set corresponding to each TRP;
   selecting, based on channel information of each TRP, a target orthogonal beam group corresponding to the TRP from the orthogonal beam group set corresponding to the TRP, and selecting a predetermined quantity of target orthogonal beams corresponding to the TRP from the target orthogonal beam group;
   determining a first feedback parameter for feeding back target orthogonal beam groups corresponding to the plurality of TRPs and a second feedback parameter for feeding back the predetermined quantity of target orthogonal beams in each of the target orthogonal beam groups; wherein the first feedback parameter comprises a first combinatorial number indicating the target orthogonal beam groups corresponding to the plurality of TRPs, and/or the second feedback parameter comprises a second combinatorial number indicating the predetermined quantity of target orthogonal beams in each of the target orthogonal beam groups; and
   sending, by the terminal, a PMI parameter, wherein the PMI parameter comprises the first feedback parameter and the second feedback parameter.

2. The method according to claim 1, wherein the determining, by a terminal based on target parameters configured by a network side for a plurality of TRPs permitting joint transmission, an orthogonal beam group set corresponding to each TRP comprises:

   obtaining target parameters for each TRP;
   obtaining values of oversampling factors $O_{1,i}$ and $O_{2,i}$ corresponding to TRP i based on the target parameters for TRP i and information indicated by higher-layer signaling or preset information, wherein TRP i is an (i+1)-th TRP among the plurality of TRPs, and $i \in \{0,1, ..., N_{Ntrp} - 1\}$, $N_{Ntrp}$ being a quantity of the plurality of TRPs; and
   obtaining an orthogonal beam group set $\varnothing_i$ corresponding to TRP i based on the obtained values of the oversampling factors $O_{1,i}$ and $O_{2,i}$ corresponding to TRP i, wherein the orthogonal beam group set $\varnothing_i$ contains $O_{1,i} \times O_{2,i}$ orthogonal beam groups.

3. The method according to claim 2, wherein the target parameters comprise:

   port configuration parameters $N_{1,i}$ and $N_{2,i}$, wherein $N_{1,i}$ and $N_{2,i}$ are quantities of antenna ports respectively configured by the network side for TRP i in two dimensions of one polarization; or
   the port configuration parameters $N_{1,i}$ and $N_{2,i}$, and the quantity $N_{Ntrp}$ of the plurality of TRPs.

4. The method according to claim 2 or 3, wherein the target parameters further comprise:

   a predetermined quantity $L_i$ of the target orthogonal beams, wherein $L_i$ is the predetermined quantity of the target orthogonal beams corresponding to TRP i; or
   a predetermined total quantity L total of target orthogonal beams, wherein L_total is a sum of quantities of target orthogonal beams corresponding to the plurality of TRPs.

5. The method according to claim 3, wherein the obtaining target parameters for each TRP comprises:

   obtaining the quantity $N_{Ntrp}$ of the plurality of TRPs configured by the network side; or
   obtaining the quantity $N_{Ntrp}$ of the plurality of TRPs based on configured target information, wherein the target information comprises one of the following: channel measurement resource CMR, transmission configuration indication TCI, and higher-layer configuration signaling.

6. The method according to claim 3 or 4, wherein the obtaining target parameters for each TRP comprises:

   obtaining a set of target parameters configured by the network side uniformly for the plurality of TRPs, wherein the plurality of TRPs have same target parameters; or
   obtaining a set of target parameters configured by the network side respectively for each TRP, wherein the target parameters configured for the TRPs are not completely the same.

7. The method according to claim 5, wherein in a case that the network side configures a set of target parameters uniformly for the TRPs, the target parameters further comprise values of oversampling factors $O_1$ and $O_2$, and the oversampling factors corresponding to TRP i satisfy that $O_{1,i} = O_1$ and $O_{2,i} = O_2$.

8. The method according to any one of claims 2 to 7, wherein the selecting, based on channel information of each TRP, a target orthogonal beam group corresponding to the TRP from the orthogonal beam group set corresponding to the TRP, and selecting a predetermined quantity of target orthogonal beams corresponding to the TRP from the target orthogonal beam group comprises:

   obtaining orthogonal beam group indices $q_{1,i}$ and $q_{2,i}$ of TRP i based on channel information of TRP i, wherein TRP i is the (i+1)-th TRP among the plurality of TRPs, and $i \in \{0, 1, ..., N_{Ntrp} - 1\}$, $N_{Ntrp}$ being the quantity of the plurality of TRPs;
   determining one target orthogonal beam group in the orthogonal beam group set $\varnothing_i$ corresponding to TRP i based on $q_{1,i}$ and $q_{2,i}$, wherein $0 \leq q_{1,i} \leq O_{1,i}$ and $0 \leq q_{2,i} \leq O_{2,i}$, and the target orthogonal beam group contains $N_{1,i} \times N_{2,i}$ orthogonal beams; and
   obtaining $L_i$ target orthogonal beams corresponding to TRP i from the target orthogonal beam group based on the channel information of TRP i, wherein $L_i$ is the predetermined quantity of the target orthogonal beams corresponding to TRP i.

9. The method according to claim 8, wherein the method further comprises, before the determining a first feedback parameter for feeding back target orthogonal beam groups corresponding to the plurality of TRPs and a second feedback parameter for feeding back the predetermined quantity of target orthogonal beams in each of the target orthogonal beam groups

   globally encoding indices of the target orthogonal beam group corresponding to each TRP to obtain information of target orthogonal beam groups corresponding to the plurality of TRPs; and
   globally encoding identification information of the $L_i$ target orthogonal beams corresponding to each TRP to obtain indices of target orthogonal beams corresponding to the plurality of TRPs, wherein the identification information is identification information of the target orthogonal beams in the target orthogonal beam group, and the identification information comprises parameters $m_i$ and $l_i$, wherein $m_i$ and $l_i$ are integers, and $0 \leq m_i \leq N_{2,i}$ and $0 \leq l_i \leq N_{1,i}$.

10. The method according to claim 9, wherein the globally encoding indices of the target orthogonal beam group corresponding to each TRP comprises one of the following:

   encoding indices $q_{1,i}$ and $q_{2,i}$ of the orthogonal beam groups of TRP i respectively as $q_1 = (i \times O_{1,i}) + q_{1,i}$ and $q_2 = q_{2,i}$;
   encoding indices $q_{1,i}$ and $q_{2,i}$ of the orthogonal beam groups of TRP i respectively as $q_2 = (i \times O_{2,i}) + q_{2,i}$ and $q_1 = q_{1,i}$;

   encoding indices $q_{1,i}$ and $q_{2,i}$ of the orthogonal beam groups of TRP i respectively as $q_1 = \sum_{k=0}^{i} O_{1,k} + q_{1,i}$ and $q_2 = q_{2,i}$; or

   encoding indices $q_{1,i}$ and $q_{2,i}$ of the orthogonal beam groups of TRP i respectively as $q_2 = \sum_{k=0}^{i} O_{2,k} + q_{2,i}$ and $q_1 = q_{1,i}$; wherein
   $O_{1,k}$, $O_{2,k}$ represents oversampling factors of TRP k among the plurality of TRPs.

11. The method according to claim 9, wherein the globally encoding identification information of the $L_i$ target orthogonal beams corresponding to each TRP comprises one of the following:

   encoding identification information of one of the $L_i$ target orthogonal beams of TRP i to obtain an index of the target orthogonal beam $m = (i * N_2) + m_i$, $l = l_i$;
   encoding identification information of one of the $L_i$ target orthogonal beams of TRP i to obtain an index of the target orthogonal beam $m = m_i$, $l = (i * N_1) + l_i$;
   encoding identification information of one of the $L_i$ target orthogonal beams of TRP i to obtain an index of the target orthogonal beam $m = \sum_{k=0}^{i} N_{2,k} + m_i$, $l = l_i$; or
   encoding identification information of one of the $L_i$ target orthogonal beams of TRP i to obtain an index of the target orthogonal beam $m = m_i, l = \sum_{k=0}^{i} N_{1,k} + l_i$; wherein $N_{1,k}, N_{2,k}$ represent port configuration parameters of TRP k.

12. The method according to any one of claims 1 to 11, wherein the determining a first feedback parameter for feeding back target orthogonal beam groups corresponding to the plurality of TRPs comprises:
mapping indices of the target orthogonal beam group corresponding to each TRP to the first combinatorial number $i_{1,1}$, wherein $i_{1,1}$ is used to indicate $N_{trp}$ vector group indices in an orthogonal vector group corresponding to the plurality of

$$i_{1,1} \in \{0,1,...,\binom{\sum_{i=0}^{N_{trp}-1} O_{1,i} * O_{2,i}}{N_{trp}} - 1\}$$

TRPs, and , wherein TRP i is an (i+1)-th TRP among the plurality of TRPs, $i \in \{0,1, ..., N_{Ntrp} - 1\}$, $N_{Ntrp}$ being a quantity of the plurality of TRPs, $O_{1,i}$ and $O_{2,i}$ are obtained oversampling factors of the TRP i, $N_{trp}$ represents a quantity of the plurality of TRPs, and $\binom{\sum_{i=0}^{N_{trp}-1} O_{1,i} * O_{2,i}}{N_{trp}}$ is a

combinatorial number for $N_{trp}$ target orthogonal beam groups selected from $\sum_{i=0}^{N_{trp}-1} O_{1,i} * O_{2,i}$ orthogonal beam groups.

13. The method according to claim 12, wherein a mapping relationship between the first combinatorial number $i_{1,1}$ and the indices of the target orthogonal beam group corresponding to each TRP comprises:

$$i_{1,1} = \sum_{i=0}^{N_{trp}-1} \binom{\sum_{i=0}^{N_{trp}-1} O_{1,i} * O_{2,i} - 1 - n^i}{N_{trp} - i},$$

wherein $n^i = (\sum_{i=0}^{N_{trp}-1} O_{1,i}) * q_2^i + q_1^i$ or $n^i = O_1 * q_2^i + q_1^i$, $n^i$ is a global index of an i-th target orthogonal beam group, $0 \leq i \leq N_{trp} - 1$; $q_2^i$ indicates an index $q_2$ of the target beam group corresponding to the i-th TRP, and $q_1^i$ indicates an index $q_1$ of the target beam group corresponding to TRP i, wherein $0 \leq q_1 \leq (\sum_{i=0}^{N_{trp}-1} O_{1,i})$ and $0 \leq q_2 \leq O_2$, or $0 \leq q_1 \leq O_1$ and $0 \leq q_2 \leq (\sum_{i=0}^{N_{trp}-1} O_{2,i})$

14. The method according to claim 12, wherein the determining a second feedback parameter for feeding back the predetermined quantity of target orthogonal beams in each of the target orthogonal beam groups comprises:
mapping indices of the predetermined quantity of target orthogonal beams corresponding to each TRP to a second combinatorial number $i_{1,2}$, wherein $i_{1,2}$ is used to indicate indices of $\sum_{i=0}^{N_{trp}-1} L_i$ target orthogonal beams in all target orthogonal beam groups indicated by the first combinatorial number, and $L_i$ is the predetermined quantity of the target orthogonal beams of TRP i.

15. The method according to claim 14, wherein

$$i_{1,2} \in \{0,1,...,\binom{\sum_{i=0}^{N_{trp}-1} N_{1,i} * N_{2,i}}{\sum_{i=0}^{N_{trp}-1} L_i} - 1\},$$

wherein $N_{1,i}$ and $N_{2,i}$ are quantities of antenna ports respectively configured by the network side for TRP i in two dimensions of one polarization, and $\binom{\sum_{i=0}^{N_{trp}-1} N_{1,i} * N_{2,i}}{\sum_{i=0}^{N_{trp}-1} L_i}$ is a combinatorial number for selecting

$$\sum_{i=0}^{Ntrp-1} L_i \quad \text{target orthogonal beams from} \quad \sum_{i=0}^{Ntrp-1} N_{1,i} N_{2,i} \quad \text{orthogonal beams.}$$

16. The method according to claim 15, wherein a mapping relationship between $i_{1,2}$ and the indices of $\sum_{i=0}^{Ntrp-1} L_i$ target orthogonal beams comprises:

$$i_{1,2} = \sum_{i=0}^{\sum_{i=0}^{Ntrp-1} L_i - 1} \begin{pmatrix} \sum_{i=0}^{Ntrp-1} N_{1,i} * N_{2,i} - 1 - n^i \\ \sum_{i=0}^{Ntrp-1} L_i - i \end{pmatrix},$$

where, $n^i = (\sum_{i=0}^{Ntrp-1} N_{1,i}) * n_2^i + n_1^i$, or $n^i = N_1 * n_2^i + n_1^i$, $n^i$ is a global index of an i-th target orthogonal beam, $0 \leq i \leq \sum_{i=0}^{Ntrp-1} L_i - 1$, $n_2^i$ represents an index $m_i$ of the i-th target orthogonal beam, and $n_1^i$ represents an index $l_i$ of the i-th target orthogonal beam, wherein $0 \leq m_i \leq N_2$ and $0 \leq l_i \leq (\sum_{i=0}^{Ntrp-1} N_{1,i})$, or $0 \leq m_i \leq (\sum_{i=0}^{Ntrp-1} N_{2,i})$ and $0 \leq l_i \leq N_1$.

17. The method according to any one of claims 1 to 16, wherein the method further comprises, before the sending, by the terminal, a PMI parameter:

   obtaining a configuration parameter of the network side to obtain a quantity of delay information corresponding to each TRP; and
   obtaining delay information of the plurality of TRPs based on the quantity of delay information corresponding to each TRP, wherein the PMI parameter further comprises the delay information of the plurality of TRPs.

18. The method according to claim 17, wherein different TRPs have different quantities of delay information.

19. The method according to claim 18, wherein the obtaining delay information of the plurality of TRPs based on the quantity of delay information corresponding to each TRP comprises obtaining the delay information of the plurality of TRPs based on a maximum quantity of delay information corresponding to the plurality of TRPs.

20. The method according to any one of claims 1 to 16, wherein the method further comprises, before the sending, by the terminal, a PMI parameter:
   obtaining, by the terminal, a feedback coefficient for feeding back a coefficient matrix of the PMI, wherein the PMI parameter further comprises the feedback coefficient.

21. The method according to claim 20, wherein the obtaining, by the terminal, a feedback coefficient for feeding back a coefficient matrix of the PMI comprises:
   setting, by the terminal, an amplitude of a TRP corresponding to a largest coefficient in the coefficient matrix as a reference value, and quantizing, based on the reference value, an amplitude of a largest coefficient of another TRP among the plurality of TRPs to obtain an amplitude quantization coefficient between the TRPs.

22. The method according to claim 21, wherein the sending, by the terminal, a PMI parameter comprises: mapping, by the terminal, the PMI parameter to channel state information CSI for sending, wherein the amplitude quantization coefficient between the TRPs is mapped to a second part of the CSI, before a polarization amplitude indicator in the PMI parameter or between the polarization amplitude indicator and a window indicator in the PMI parameter.

23. A PMI obtaining method for multi-TRP transmission, comprising:

   indicating, by a network-side device to a terminal, target parameters for a plurality of TRPs permitting joint transmission;
   receiving a PMI parameter from the terminal, wherein the PMI parameter comprises a first feedback parameter and a second feedback parameter; wherein the first feedback parameter comprises a first combinatorial number indicating target orthogonal beam groups corresponding to the plurality of TRPs, and/or the second feedback parameter comprises a second combinatorial number indicating a predetermined quantity of target orthogonal beams in each of the target orthogonal beam groups; and
obtaining, by the network-side device, a PMI for each TRP based on the PMI parameter.

24. The method according to claim 23, wherein the target parameters comprise:

port configuration parameters $N_{1,i}$ and $N_{2,i}$, wherein $N_{1,i}$ and $N_{2,i}$ are quantities of antenna ports respectively configured by the network side for TRP i in two dimensions of one polarization; or
the port configuration parameters $N_{1,i}$ and $N_{2,i}$, and a quantity $N_{Ntrp}$ of the plurality of TRPs; wherein TRP i is an (i+1)-th TRP among the plurality of TRPs, and $i \in \{0,1, ... , N_{Ntrp} - 1\}$.

25. The method according to claim 24, wherein the target parameters further comprise:

a predetermined quantity $L_i$ of the target orthogonal beams, wherein $L_i$ is the predetermined quantity of the target orthogonal beams corresponding to TRP i; or
a predetermined total quantiy L_total of target orthogonal beams, wherein L_total is a sum of quantities of target orthogonal beams corresponding to the plurality of TRPs.

26. The method according to claim 24, wherein the indicating, by a network-side device to a terminal, target parameters for a plurality of TRPs permitting joint transmission comprises:

configuring, by the network-side device, the quantity $N_{NtRp}$ of the plurality of TRPs for the terminal; or
indicating, by the network-side device, the quantity $N_{Ntrp}$ of the plurality of TRPs based on configured target information, wherein the target information comprises one of the following: channel measurement resource CMR, transmission configuration indication TCI, and higher-layer configuration signaling.

27. The method according to any one of claims 23 to 26, wherein the indicating, by a network-side device to a terminal, target parameters for a plurality of TRPs permitting joint transmission comprises:

configuring, by the network-side device, a set of target parameters uniformly for the plurality of TRPs to indicate that the plurality of TRPs have same target parameters; or
configuring, by the network-side device, a set of target parameters respectively for each TRP to indicate the set of target parameters corresponding to each TRP, wherein the target parameters configured for the TRPs are not completely the same.

28. A PMI feedback apparatus for multi-TRP transmission, comprising:

a first determining module, configured to determine, based on target parameters configured by a network side for a plurality of TRPs permitting joint transmission, an orthogonal beam group set corresponding to each TRP;
a selection module, configured to select, based on channel information of each TRP, a target orthogonal beam group corresponding to the TRP from the orthogonal beam group set corresponding to the TRP, and select a predetermined quantity of target orthogonal beams corresponding to the TRP from the target orthogonal beam group;
a second determining module, configured to determine a first feedback parameter for feeding back target orthogonal beam groups corresponding to the plurality of TRPs and a second feedback parameter for feeding back the predetermined quantity of target orthogonal beams in each of the target orthogonal beam groups; wherein the first feedback parameter comprises a first combinatorial number indicating the target orthogonal beam groups corresponding to the plurality of TRPs, and/or the second feedback parameter comprises a second combinatorial number indicating the predetermined quantity of target orthogonal beams in each of the target orthogonal beam groups; and
a first sending module, configured to send a PMI parameter, wherein the PMI parameter comprises the first feedback parameter and the second feedback parameter.

29. The apparatus according to claim 28, wherein the determining, by the first determining module, an orthogonal beam group set corresponding to each TRP comprises:

obtaining target parameters for each TRP;

obtaining values of oversampling factors $O_{1,i}$ and $O_{2,i}$ corresponding to TRP i based on the target parameters for TRP i and information indicated by higher-layer signaling or preset information, wherein TRP i is an (i+1)-th TRP among the plurality of TRPs, and $i \in \{0,1, ... , N_{Ntrp} - 1\}$, $N_{Ntrp}$ being a quantity of the plurality of TRPs; and obtaining an orthogonal beam group set $\emptyset_i$ corresponding to TRP i based on the obtained values of the oversampling factors $O_{1,i}$ and $O_{2,i}$ corresponding to TRP i, wherein the orthogonal beam group set $\emptyset_i$ contains $O_{1,i} \times O_{2,i}$ orthogonal beam groups.

30. The apparatus according to claim 29, wherein the obtaining, by the first determining module, target parameters for each TRP comprises:

obtaining a set of target parameters configured by the network side uniformly for the plurality of TRPs, indicating that the plurality of TRPs have same target parameters; or
obtaining a set of target parameters configured by the network side respectively for each TRP to indicate the set of target parameters corresponding to each TRP, wherein the target parameters configured by the network side for the TRPs are not completely the same.

31. The method according to claim 29 or 30, wherein the selecting, by the selection module, a target orthogonal beam group corresponding to the TRP from the orthogonal beam group set corresponding to each TRP, and selecting a predetermined quantity of target orthogonal beams corresponding to each TRP from the target orthogonal beam group comprises:

obtaining orthogonal beam group indices $q_{1,i}$ and $q_{2,i}$ of TRP i based on channel information of TRP i, wherein TRP i is the (i+1)-th TRP among the plurality of TRPs, and $i \in \{0,1, ..., N_{Ntrp} - 1\}$, $N_{Ntrp}$ being the quantity of the plurality of TRPs;
determining one target orthogonal beam group in the orthogonal beam group set $\emptyset$ corresponding to TRP i based on $q_{1,i}$ and $q_{2,i}$, wherein $0 \leq q_{1,i} \leq O_{1,i}$ and $0 \leq q_{2,i} \leq O_{2,i}$, and the target orthogonal beam group contains $N_{1,i} \times N_{2,i}$ orthogonal beams; and
obtaining $L_i$ target orthogonal beams corresponding to TRP i from the target orthogonal beam group based on the channel information of TRP i, wherein $L_i$ is the predetermined quantity of the target orthogonal beams corresponding to TRP i.

32. The apparatus according to claim 31, wherein the second determining module is further configured to:

globally encode indices of the target orthogonal beam group corresponding to each TRP to obtain information of target orthogonal beam groups corresponding to the plurality of TRPs; and
globally encode identification information of the $L_i$ target orthogonal beams corresponding to each TRP to obtain indices of target orthogonal beams corresponding to the plurality of TRPs, wherein the identification information is identification information of the target orthogonal beams in the target orthogonal beam group, and the identification information comprises $m_i$ and $l_i$, wherein $m_i$ and $l_i$ are integers, and $0 \leq m_i \leq N_{2,i}$ and $0 \leq l_i \leq N_{l,i}$.

33. The apparatus according to any one of claims 28 to 32, wherein the determining, by the second determining module, a first feedback parameter for feeding back target orthogonal beam groups corresponding to the plurality of TRPs comprises:
mapping indices of the target orthogonal beam group corresponding to each TRP to the first combinatorial number $i_{1,1}$, wherein $i_{1,1}$ is used to indicate $N_{trp}$ vector group indices in an orthogonal vector group corresponding to the plurality of

$$i_{1,1} \in \left\{0,1, ..., \binom{\Sigma_{i=0}^{N_{trp}-1} O_{1,i} * O_{2,i}}{N_{trp}} - 1\right\}$$

TRPs, and , wherein TRP i is an (i+1)-th TRP among the plurality of TRPs, $i \in \{0,1, ..., N_{Ntrp} - 1\}$, $N_{Ntrp}$ being a quantity of the plurality of TRPs, $O_{1,i}$ and $O_{2,i}$ are obtained oversampling factors of the TRP i, $N_{trp}$ represents a quantity of the plurality of TRPs, and $\binom{\Sigma_{i=0}^{N_{trp}-1} O_{1,i} * O_{2,i}}{N_{trp}}$ is a

combinatorial number for $N_{trp}$ target orthogonal beam groups selected from $\Sigma_{i=0}^{N_{trp}-1} O_{1,i} * O_{2,i}$, orthogonal beam groups.

34. The apparatus according to claim 33, wherein the determining, by the second determining module, a second feedback parameter for feeding back the predetermined number of target orthogonal beams in each of the target orthogonal beam groups comprises:

    mapping indices of the predetermined quantity of target orthogonal beams corresponding to each TRP to a second combinatorial number $i_{1,2}$, wherein $i_{1,2}$ is used to indicate indices of $\sum_{i=0}^{N_{trp}-1} L_i$ target orthogonal beams in all target orthogonal beam groups indicated by the first combinatorial number, and $L_i$ is the predetermined quantity of the target orthogonal beams of TRP i.

35. The apparatus according to any one of claims 28 to 34, wherein the second determining module is further configured to:

    obtain a configuration parameter of the network side to obtain a quantity of delay information corresponding to each TRP; and
    obtain delay information of the plurality of TRPs based on the quantity of delay information corresponding to each TRP, wherein the PMI parameter further comprises the delay information of the plurality of TRPs.

36. The apparatus according to any one of claims 28 to 34, wherein the second determining module is further configured to:
    obtain a feedback coefficient for feeding back a coefficient matrix of the PMI, wherein the PMI parameter further comprises the feedback coefficient.

37. The apparatus according to claim 36, wherein the sending, by the first sending module, a PMI parameter comprises mapping the PMI parameter to CSI for sending, wherein the amplitude quantization coefficient between the TRPs is mapped to a second part of the CSI, before a polarization amplitude indicator in the PMI parameter or between the polarization amplitude indicator and a window indicator in the PMI parameter.

38. A PMI obtaining apparatus for multi-TRP transmission, comprising:

    a second sending module, configured to indicate to a terminal target parameters for a plurality of TRPs permitting joint transmission;
    a receiving module, configured to receive a PMI parameter from the terminal, wherein the PMI parameter comprises a first feedback parameter and a second feedback parameter; wherein the first feedback parameter comprises a first combinatorial number indicating the target orthogonal beam groups corresponding to the plurality of TRPs, and/or the second feedback parameter comprises a second combinatorial number indicating a predetermined quantity of target orthogonal beams in each of the target orthogonal beam groups; and
    an obtaining module, configured to obtain a PMI for each TRP based on the PMI parameter.

39. A terminal, comprising a processor and a memory, wherein the memory stores a program or instructions executable on the processor, and when the program or instructions are executed by the processor, the steps of the PMI feedback method for multi-TRP transmission according to any one of claims 1 to 22 are implemented.

40. A network-side device, comprising a processor and a memory, wherein the memory stores a program or instructions executable on the processor, and when the program or instructions are executed by the processor, the steps of the PMI obtaining method for multi-TRP transmission according to any one of claims 23 to 27 are implemented.

41. A readable storage medium, wherein a program or instructions are stored on the readable storage medium, and when the program or instructions are executed by a processor, the steps of the PMI feedback method for multi-TRP transmission according to any one of claims 1 to 22 are implemented, or the steps of the PMI obtaining method for multi-TRP transmission according to any one of claims 23 to 27 are implemented.

FIG. 1

200                                                    S210

A terminal determines, based on a target parameter configured by a network side for a plurality of TRPs permitting joint transmission, an orthogonal beam group set corresponding to each TRP

S212

Select, based on channel information of each TRP, a target orthogonal beam group corresponding to the TRP from the orthogonal beam group set corresponding to the TRP, and select a predetermined quantity of target orthogonal beams corresponding to the TRP from the target orthogonal beam group

S214

Determine a first feedback parameter for feeding back target orthogonal beam groups corresponding to the plurality of TRPs and a second feedback parameter for feeding back the predetermined quantity of target orthogonal beams in each of the target orthogonal beam groups

S216

The terminal sends a PMI parameter, where the PMI parameter includes the first feedback parameter and the second feedback parameter

FIG. 2

300

S310

A network-side device indicates to a terminal target parameters for a plurality of TRPs permitting joint transmission

S312

Receive a PMI parameter from the terminal, where the PMI parameter includes a first feedback parameter and a second feedback parameter

S314

The network-side device obtains a PMI for each TRP based on the PMI parameter

FIG. 3

400

S410

Obtains a PMI parameter

S412

Feed back the PMI parameter

FIG. 4

FIG. 5

600

601

Second sending module

602

Receiving module

603

Obtaining module

FIG. 6

700

Communication device

701 Processor ⟺ Memory 702

FIG. 7

FIG. 8

900

901

Network device

904

Processor

905

Memory

Bus interface

Radio frequency apparatus

902

Baseband apparatus

903

Network interface

906

FIG. 9

## INTERNATIONAL SEARCH REPORT

| International application No. |
|---|
| **PCT/CN2023/090275** |

**A.    CLASSIFICATION OF SUBJECT MATTER**

H04B 7/06(2006.01)i

According to International Patent Classification (IPC) or to both national classification and IPC

**B.    FIELDS SEARCHED**

Minimum documentation searched (classification system followed by classification symbols)

IPC：H04B，H04L，H04W

Documentation searched other than minimum documentation to the extent that such documents are included in the fields searched

Electronic data base consulted during the international search (name of data base and, where practicable, search terms used)

CNTXT, ENTXT, ENTXTC, CNKI, 3GPP: 波束组, 反馈, 波束, 预编码, 矩阵, 码本, 接收点, 信道, PMI, group, feedback, precod+, beam, CSI, TRP, multi+

**C.    DOCUMENTS CONSIDERED TO BE RELEVANT**

| Category* | Citation of document, with indication, where appropriate, of the relevant passages | Relevant to claim No. |
|---|---|---|
| X | CN 112368948 A (NEC CORP.) 12 February 2021 (2021-02-12) description, paragraphs 29-122 | 1, 17-23, 27, 28, 35-41 |
| A | CN 113169771 A (QUALCOMM INC.) 23 July 2021 (2021-07-23) entire document | 1-41 |
| A | WO 2018147700 A1 (LG ELECTRONICS INC.) 16 August 2018 (2018-08-16) entire document | 1-41 |
| A | ZTE. "R1-1908194 Further details on multi-beam and TRP operation" *3GPP tsg_ran\wg1_rl1*, 17 August 2019 (2019-08-17), pages 1-17 | 1-41 |
| A | AT&T. "R1-1909075 Enhancements on Multi-TRP Transmission" *3GPP tsg_ran\wg1_rl1*, 17 August 2019 (2019-08-17), pages 1-10 | 1-41 |
| A | ERICSSON. "R1-1716363 CSI feedback for multi-TRP" *3GPP tsg_ran\wg1_rl1*, 12 September 2017 (2017-09-12), pages 1-9 | 1-41 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **04 August 2023** | **08 August 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/090275**

| Patent document cited in search report | | | Publication date (day/month/year) | Patent family member(s) | | | Publication date (day/month/year) |
|---|---|---|---|---|---|---|---|
| CN | 112368948 | A | 12 February 2021 | WO | 2020006755 | A1 | 09 January 2020 |
| | | | | US | 2021273692 | A1 | 02 September 2021 |
| | | | | JP | 202153615 | W | 23 December 2021 |
| | | | | US | 11349534 | B2 | 31 May 2022 |
| | | | | US | 2022255598 | A1 | 11 August 2022 |
| | | | | JP | 7248096 | B2 | 29 March 2023 |
| CN | 113169771 | A | 23 July 2021 | EP | 3895332 | A1 | 20 October 2021 |
| | | | | EP | 3895332 | A4 | 17 August 2022 |
| | | | | US | 2021384945 | A1 | 09 December 2021 |
| | | | | WO | 2020119746 | A1 | 18 June 2020 |
| | | | | WO | 2020118731 | A1 | 18 June 2020 |
| WO | 2018147700 | A1 | 16 August 2018 | US | 2020007282 | A1 | 02 January 2020 |
| | | | | US | 11108513 | B2 | 31 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210442243

- CN 202211228519